(19) Europäisches Patentamt / European Patent Office / Office européen des brevets

(11) **EP 4 668 514 A1**

(12) **DEMANDE DE BREVET EUROPEEN**

(43) Date de publication:
**24.12.2025 Bulletin 2025/52**

(21) Numéro de dépôt: **25182890.1**

(22) Date de dépôt: **16.06.2025**

(51) Classification Internationale des Brevets (IPC):
**H02H 3/093** *(2006.01)* **H02H 7/26** *(2006.01)*
**H02H 3/06** *(2006.01)*

(52) Classification Coopérative des Brevets (CPC):
**H02H 3/093; H02H 3/063; H02H 7/26**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **17.06.2024 FR 2406441**

(71) Demandeur: **SCHNEIDER ELECTRIC INDUSTRIES SAS**
**92500 Rueil-Malmaison (FR)**

(72) Inventeur: **HERAUD, Sébastien**
**38100 GRENOBLE (FR)**

(74) Mandataire: **Lavoix**
**62, rue de Bonnel**
**69448 Lyon Cedex 03 (FR)**

(54) **PROCÉDÉ DE COMMANDE D'UN DISPOSITIF DE PROTECTION ÉLECTRIQUE, DISPOSITIF ET INSTALLATION ASSOCIÉS**

(57) La présente invention concerne un procédé de commande d'un dispositif de protection électrique, comprenant :

c) lorsqu'un défaut électrique de type court-circuit est détecté lors d'une étape b) et lorsque l'énergie de déclenchement est supérieure ou égale au seuil d'énergie de déclenchement à l'étape d), commander (S118) en configuration bloquée chaque module de commutation ;
e) lorsque la durée de reconduction du disjoncteur donné est écoulée, commander (S122) chaque module de commutation en configuration passante;

f) si un disjoncteur est connecté immédiatement en amont du disjoncteur donné, une durée de test (Tt) n'est pas écoulée et un court-circuit est détecté, effectuer à nouveau les étapes c) à f) ; et si aucun disjoncteur n'est connecté immédiatement en amont du disjoncteur donné, la durée de test (Tt) n'est pas écoulée et un court-circuit est détecté, commander (S138) chaque module de commutation en configuration bloquée.

FIG.2

## Description

La présente invention concerne un procédé de commande d'un dispositif de protection électrique, ainsi qu'un dispositif et une installation associés.

Dans une installation électrique, il est connu de connecter, entre une source et une charge, un ou plusieurs dispositifs de protection. Le dispositif de protection permet de protéger les câbles. Il est donc fréquent de trouver plusieurs dispositifs de protection électromécanique de calibres différent en série, chacun permettant de protéger des sections de câbles différentes partant de la plus grande section connectée à la source jusqu'à la plus petite connectée à la charge. Le dispositif de protection disposé en tête peut-être par exemple un disjoncteur hybride ou statique associé à un ou des disjoncteur(s) électromécanique en aval. Pour assurer le déclenchement des disjoncteurs électromécaniques, il est nécessaire de retarder un déclenchement du dispositif de protection, afin que le disjoncteur électromécanique ait reçu suffisamment d'énergie pour être déclenché.

Il est également possible de connecter en série deux disjoncteurs électromécaniques, le disjoncteur en aval ayant un calibre inférieur au disjoncteur en amont. Afin de protéger l'installation et éviter l'endommagement du disjoncteur le plus en aval, le seuil de déclenchement du disjoncteur en amont doit être égal ou inférieur au calibre du disjoncteur en aval. Une interruption du courant en cas de défaut électrique de type court-circuit ne dépend donc que d'un seul seuil de déclenchement. Or, afin de protéger toutes les sections de câbles d'une installation, il peut être nécessaire de connecter plusieurs disjoncteurs électromécaniques de calibres différents, et d'assurer plusieurs seuils de déclenchement.

Les documents KR-2023/0096655-A, CN-205 104 889-U et US-2014/078631-A1 décrivent chacun des exemples connus d'installations électriques et/ou de méthodes de commande associées.

Le but de l'invention est alors de proposer une méthode permettant d'assurer un déclenchement sélectif d'une pluralité de disjoncteurs électromécaniques dont les calibres sont différents.

À cet effet, l'invention a pour objet un procédé de commande d'un dispositif de protection électrique, configuré pour être connecté entre une source et une série de disjoncteurs, le dispositif comprenant :

- une cellule d'interruption, comprenant au moins un module de commutation, chaque module de commutation comprenant :

    ◦ au moins un élément semi-conducteur ; et
    ◦ un élément de limitation, connecté en parallèle de au moins un élément semi-conducteur, l'élément de limitation ayant une tension de limitation, la ou les tensions de limitation, seules et/ou sommées entre elles, formant un ou une pluralité de paliers distincts,

chaque module de commutation étant configuré pour basculer entre une configuration passante, dans laquelle un courant circulant entre la source et la série de disjoncteurs circule dans le ou dans l'un des éléments semi-conducteurs, et une configuration bloquée, dans laquelle, si le courant circule dans le module de commutation, il circule dans l'élément de limitation ;

- un capteur de courant, configuré pour mesurer une intensité et/ou une dérivée du courant ;

- une unité de contrôle comprenant un module de traitement, et un module de commande de cellule, configuré pour commander chaque module de commutation dans la configuration passante et dans la configuration bloquée, chaque disjoncteur de la série étant configuré pour basculer entre une configuration armée et une configuration déclenchée, chaque disjoncteur de la série étant associé à un seuil de courant de défaut, un seuil d'énergie de déclenchement et une durée de reconduction, les disjoncteurs étant connectés en série les uns aux autres et arrangés de l'amont vers l'aval par ordre décroissant de leur seuil de courant de défaut respectif :

le procédé comprenant au moins les étapes suivantes :

    a) mesurer l'intensité et/ou la dérivée de l'intensité en fonction du temps par le capteur de courant ;
    b) détecter un défaut électrique de type court-circuit par le module de traitement, si l'intensité mesurée par le capteur de courant est strictement supérieure au seuil de courant de défaut et/ou la dérivée mesurée par le capteur de courant est strictement supérieure à un seuil de dérivée de défaut d'un disjoncteur donné, le disjoncteur donné étant le disjoncteur en configuration armée le plus en aval de la série de disjoncteurs;
    c) lorsqu'un défaut électrique de type court-circuit est détecté, attendre que l'énergie de déclenchement devienne supérieure ou égale à un seuil d'énergie de déclenchement du disjoncteur donné ;
    d) lorsque l'énergie de déclenchement est supérieure ou égale au seuil d'énergie de déclenchement du disjoncteur donné, commander en configuration bloquée chaque module de commutation par le module de commande de cellule ;
    e) lorsque la durée de reconduction du disjoncteur donné est écoulée, le disjoncteur donné ayant basculé en configuration déclenchée, commander chaque module de commutation en configuration passante, alors que chaque module de commutation a été commandé en configuration bloquée à l'étape d) ;

f) si un disjoncteur est connecté immédiatement en amont du disjoncteur donné, si une durée de test n'est pas écoulée et si un court-circuit est détecté, le seuil de courant de défaut, le seuil d'énergie de déclenchement et la durée de reconduction étant celles du disjoncteur en configuration armée immédiatement en amont du disjoncteur donné, effectuer à nouveau les étapes c) à f) ; et

g) si aucun disjoncteur n'est connecté immédiatement en amont du disjoncteur donné, si la durée de test n'est pas écoulée et si un court-circuit est détecté, le seuil de courant de défaut étant égal à un seuil de courant de défaut final, commander chaque module de commutation en configuration bloquée.

Grâce à l'invention, il est possible de déclencher successivement les disjoncteurs, du disjoncteur le plus en aval, c'est-à-dire le plus proche de la charge, au disjoncteur le plus en amont, c'est-à-dire le plus proche de la source. Ainsi, il est possible d'obtenir des seuils de courant de défaut différents pour différents disjoncteurs de la série de disjoncteurs, ce qui permet d'interrompre le courant seulement pour les disjoncteurs en aval du défaut à partir d'un unique dispositif de protection, tout en laissant ceux en amont du défaut armés et fonctionnant normalement. Cela permet de limiter l'interruption d'une alimentation de charges connectées en amont du défaut électrique.

De plus, grâce à l'attente que l'énergie de déclenchement atteigne le seuil d'énergie de déclenchement avant la commande des modules de commutation en configuration bloquée, le procédé de commande permet de limiter le courant et l'énergie circulant entre la source et la charge au minimum nécessaire pour déclencher le disjoncteur armé le plus en amont, tout en s'assurant du déclenclenchement de ce dernier. Cela permet de limiter les contraintes électriques et thermiques dans l'installation et dans les câbles.

Suivant d'autres aspects avantageux de l'invention, le procédé comprend une ou plusieurs des caractéristiques suivantes, prises isolément ou suivant toutes les combinaisons techniquement possibles :

- Le procédé comprend, en outre, les étapes successives suivantes :

  h) détecter un défaut électrique de type court-circuit par le module de traitement, si l'intensité mesurée par le capteur de courant à l'étape a) est strictement supérieure à un seuil de courant de défaut furtif et/ou la dérivée mesurée par le capteur de courant à l'étape a) est strictement supérieure à un seuil de dérivée de défaut ;

  i) commander en configuration bloquée chaque module de commutation par le module de commande de cellule si un défaut électrique est détecté à l'étape h) ;

  j) lorsqu'une durée de reconduction du défaut furtif est écoulée, commander chaque module de commutation en configuration passante; et

  k) si la durée de test n'est pas écoulée, effectuer les étapes b) à g), le disjoncteur donné étant le disjoncteur en configuration armée connecté le plus en aval.

- Le procédé comprend, en outre, l'étape suivante :
  l) lorsqu'un défaut électrique de type court-circuit est détecté par le module de traitement, commander en configuration ouverte un interrupteur mécanique, connecté en parallèle de la cellule d'interruption, l'interrupteur mécanique étant configuré pour basculer entre une configuration fermée, dans laquelle l'interrupteur mécanique conduit le courant, et une configuration ouverte, dans laquelle l'interrupteur mécanique ne conduit pas le courant, par un module de commande d'interrupteur mécanique inclus dans l'unité de contrôle, alors que l'étape i) est effectuée lorsqu'une tenue diélectrique de l'interrupteur mécanique est supérieure à une somme de la tension de limitation de l'élément de limitation de chaque module de commutation.

- Si la durée de test est écoulée et si un court-circuit n'est pas détecté, commander l'interrupteur mécanique en configuration fermée.

- Ce procédé comprend en outre l'étape suivante :
  m) si la durée de test est écoulée, et que l'intensité est strictement supérieure à un seuil de courant de défaut furtif et/ou la dérivée mesurée par le capteur de courant est strictement supérieure à un seuil de dérivée de défaut, commander chaque module de commutation en configuration bloquée.

- Chaque disjoncteur est, en outre, associé à un seuil d'intensité minimale et un seuil d'intensité maximale et dans lequel l'étape c) comprend en outre les sous-étapes suivantes:

  c1) lorsqu'un défaut électrique de type court-circuit est détecté par le module de traitement à l'étape b), que l'énergie de déclenchement est inférieure ou égale au seuil d'énergie de déclenchement du disjoncteur donné et que l'intensité mesurée par le capteur de courant est inférieure ou égale au seuil d'intensité minimale, commander en configuration passante, par le module de commande de cellule, le ou les modules de commutation dont les tensions de limitation des éléments de limitation forment un palier d'écrêtage, le palier d'écrêtage étant le plus petit palier supérieur à une tension réseau nominale; et

  c2) lorsqu'un défaut électrique de type court-circuit est détecté par le module de traitement à l'étape b), que l'énergie de déclenchement est inférieure ou égale au seuil d'énergie de déclenchement du disjoncteur donné et que l'intensité mesurée par le capteur de courant atteint le seuil d'intensité maximale, commander en configuration bloquée, par le module de commande de cellule, le ou les modules de commutation dont les tensions de limitation des éléments de limitation forment le palier d'écrêtage.

- Le dispositif comprend une pluralité de modules de commutation, connectés les uns aux autres, la sous-étape c2) comprend, en outre, une commande en configuration passante, par le module de commande de cellule, des modules de commutation dont les tensions de limitation des éléments de limitation ne forment pas le palier d'écrêtage.

L'invention concerne également un dispositif de protection électrique configuré pour être connecté entre une source et une série de disjoncteurs, chaque disjoncteur de la série étant configuré pour basculer entre une configuration armée et une configuration déclenchée, chaque disjoncteur de la série étant associé à un seuil de courant de défaut, un seuil d'énergie de déclenchement et une durée de reconduction, les disjoncteurs étant configurés pour être connectés en série les uns aux autres et arrangés de l'amont vers l'aval par ordre décroissant de leur seuil de courant de défaut respectif, le dispositif comprenant :

- une cellule d'interruption, comprenant au moins un module de commutation, chaque module de commutation comprenant :

  ◦ au moins un élément semi-conducteur ; et
  ◦ un élément de limitation, connecté en parallèle de l'au moins un élément semi-conducteur, l'élément de limitation ayant une tension de limitation, la ou les tensions de limitation, seules et/ou sommées entre elles, formant un ou une pluralité de paliers distincts, chaque module de commutation étant configuré pour basculer entre une configuration passante, dans laquelle un courant circulant entre la source et la série de disjoncteurs circule dans le ou dans l'un des éléments semi-conducteurs, et une configuration bloquée, dans laquelle si le courant circule dans le module de commutation, il circule dans l'élément de limitation ;

- un capteur de courant, configuré pour mesurer une intensité) du courant et/ou une dérivée du courant ;
- une unité de contrôle comprenant :

  ◦ un module de traitement configuré pour détecter un défaut électrique de type court-circuit en fonction de l'intensité et/ou de la dérivée mesurée par le capteur de courant ; et
  ◦ un module de commande de cellule, configuré pour commander chaque module de commutation dans la configuration passante et dans la configuration bloquée,

le dispositif étant configuré pour mettre en œuvre le procédé décrit précédemment.

Avantageusement, ce dispositif, comprend un unique module de commutation, la tension de limitation de l'élément de limitation de tension du module de commutation formant alors le palier d'écrêtage.
L'invention concerne également une installation électrique comprenant une source, une charge, une série de disjoncteurs, connectés entre la source et la charge, chaque disjoncteur de la série étant configuré pour basculer entre une configuration armée et une configuration déclenchée, chaque disjoncteur de la série étant associé à un seuil de courant de défaut, un seuil d'énergie de déclenchement et une durée de reconduction, les disjoncteurs étant connectés en série les uns aux autres et arrangés de l'amont vers l'aval par ordre décroissant de leur seuil de courant de défaut respectif, et un dispositif ainsi que décrit précédemment, connecté entre la source et la série de disjoncteurs.
L'invention apparaîtra plus clairement à la lecture de la description qui va suivre, donnée uniquement à titre d'exemple non limitatif, et faite en référence aux dessins dans lesquels :

- [Fig. 1] la figure 1 est un schéma électrique d'une installation électrique selon l'invention ;

- [Fig. 2] la figure 2 est un schéma électrique d'un dispositif de protection électrique selon un premier mode de réalisation de l'invention ;

- [Fig. 3] la figure 3 est un graphe de grandeurs caractéristiques du dispositif de la figure 2, en fonction du temps ;

- [Fig. 4] la figure 4 est une vue de détail de l'encadré IV à la figure 3 ;

- [Fig. 5] la figure 5 est un logigramme d'un procédé de commande du dispositif de la figure 3, conforme à l'invention ;

- [Fig. 6] la figure 6 est un schéma électrique d'un dispositif de protection électrique selon un deuxième mode de réalisation de l'invention ;

- [Fig. 7] la figure 7 est un schéma électrique d'une cellule d'interruption du dispositif de la figure 6 ;

- [Fig. 8] la figure 8 est un graphe de grandeurs caractéristiques du dispositif de la figure 6, en fonction du temps ;

- [Fig. 9] la figure 9 est une vue de détail de l'encadré X à la figure 8;

- [Fig. 10] la figure 10 est un logigramme d'un procédé de commande du dispositif de la figure 6, conforme à l'invention ; et

- [Fig. 11] la figure 11 est un schéma électrique d'une cellule d'interruption appartenant à un dispositif de protection électrique selon un troisième mode de réalisation de l'invention.

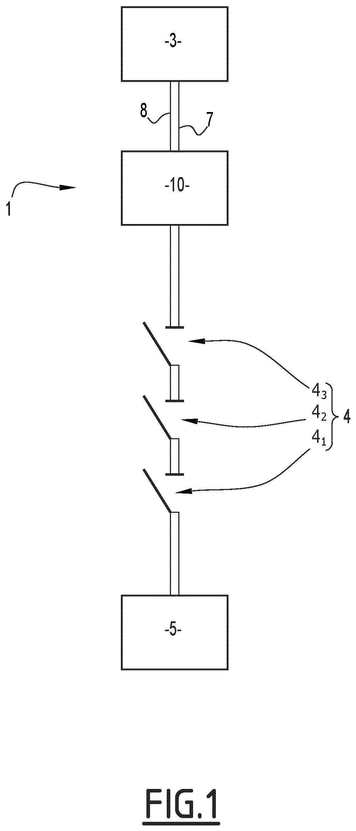

La figure 1 est un schéma d'une installation électrique 1 comprenant une source 3, une série de disjoncteurs 4 et une charge 5, électriquement reliés entre eux par un conducteur de phase 7 et un conducteur de neutre 8.

La source 3 fournit de l'électricité et est, par exemple, un générateur électrique ou un réseau électrique, par exemple un réseau électrique de secteur.

La charge 5 est un appareil consommant de l'électricité, tel qu'un appareil électrique domestique, un équipement industriel comme un moteur électrique, ou encore un serveur. Ainsi, un courant électrique, dit simplement courant par la suite, circule entre la source 3 et la charge 5 à travers le conducteur de phase 7, et revient à la source 3 par le conducteur de neutre 8.

Le courant est un courant basse tension ou moyenne tension, c'est-à-dire qu'une tension nominale $U_s$ du courant, dite aussi tension du secteur ou tension réseau nominale, est inférieure à 52 000 V. Le courant est un courant alternatif ou, en variante, un courant continu.

La série de disjoncteurs 4 est connecté entre la source 3 et la charge 5. La série de disjoncteurs 4 comprend une pluralité de disjoncteurs, ici trois disjoncteurs $4_1$, $4_2$ et $4_3$.

Dans l'exemple de la figure 1, le disjoncteur $4_1$ est le disjoncteur le plus en aval, c'est-à-dire le plus proche de la charge 5. Le disjoncteur $4_3$ est le disjoncteur le plus en amont, c'est-à-dire le plus proche de la source 3. Le disjoncteur $4_2$ est le disjoncteur intermédiaire, c'est-à-dire le disjoncteur situé entre les disjoncteurs amont et aval.

Chaque disjoncteur $4_1$, $4_2$, $4_3$ est configuré pour basculer entre une configuration armée, dans laquelle il conduit le courant électrique, et une configuration déclenchée, dans laquelle il ne conduit pas le courant électrique. Chaque disjoncteur $4_1$, $4_2$, $4_3$ est associé à un seuil de courant de défaut distinct, respectivement $I_1$, $I_2$, $I_3$, et une durée de reconduction, respectivement $T_{r1}$, $T_{r2}$ et $T_{r3}$. Les disjoncteurs $4_1$, $4_2$ et $4_3$ sont connectés en série les uns aux autres de telle sorte à être arrangés de l'amont vers l'aval par ordre décroissant de leur seuil de courant de défaut respectif. Ainsi, dans l'exemple de la figure 1, le seuil de courant de défaut $I_3$ est supérieur au seuil de courant de défaut $I_2$, lui-même supérieur au seuil de courant de défaut $I_1$.

La série de disjoncteurs 4 comprend au moins deux disjoncteurs dont les seuils se défaut sont distincts.

En variante non représentée, les seuils de courant de défaut de deux disjoncteurs adjacents peuvent être égaux.

Les disjoncteurs $4_1$, $4_2$ et $4_3$ sont des disjoncteurs électromécaniques ou des disjoncteurs statiques. Dans l'exemple de la figure 1, les disjoncteurs $4_1$, $4_2$ et $4_3$ sont tous des disjoncteurs électromécaniques. Chaque disjoncteur électromécanique $4_1$, $4_2$, $4_3$ est configuré pour se déclencher et interrompre le courant circulant depuis la source 3 vers la charge 5 lorsqu'un défaut électrique de type court-circuit, appelé par la suite court-circuit, est présent dans l'installation électrique 1. Chaque disjoncteur électromécanique $4_1$, $4_2$, $4_3$ comprend des contacts et un déclencheur pouvant être une bobine, une palette magnétique, un dispositif électronique ou électromécanique, non représenté, qui, lorsqu'il reçoit une énergie suffisante, est responsable de la séparation des contacts.

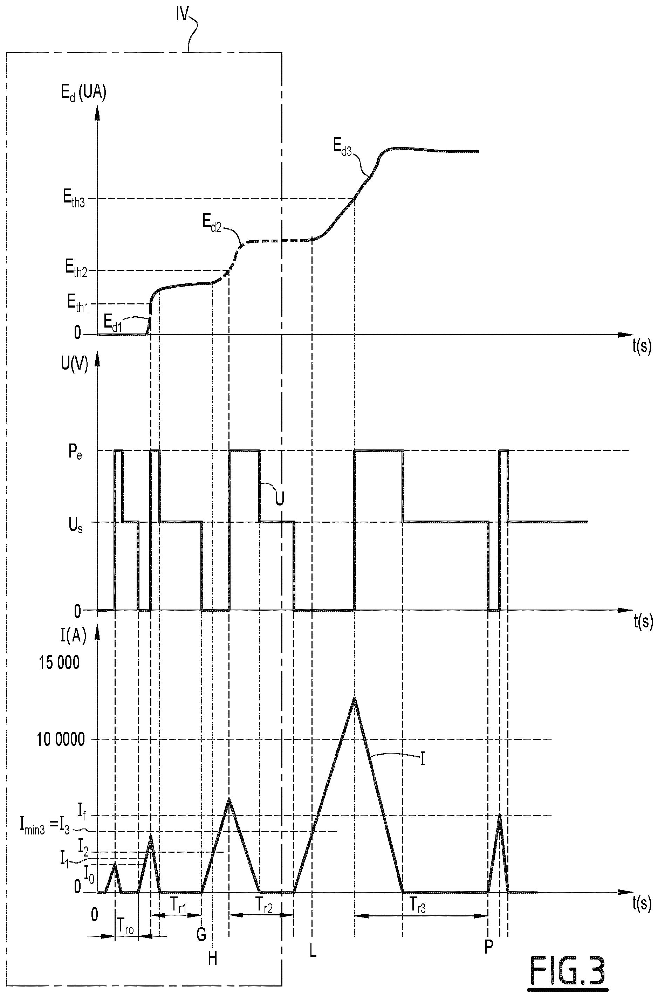

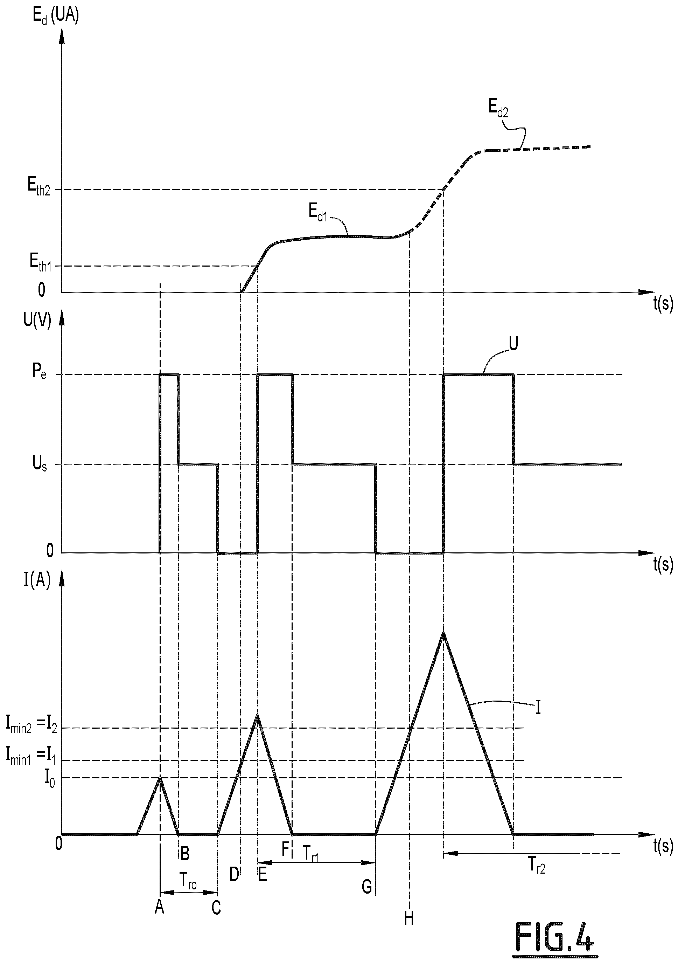

Plus précisément, lorsqu'un court-circuit est présent dans l'installation électrique 1, une intensité I du courant circulant entre la source 3 et la charge 5, exprimée en ampères (A) sur les figures 3 et 4, augmente rapidement et de manière importante, par exemple de plusieurs dizaines d'ampères par microseconde. Chaque disjoncteur $4_1$, $4_2$, $4_3$, est associé à un seuil d'énergie de déclenchement, respectivement $E_{th1}$, $E_{th2}$ et $E_{th3}$. Lorsque le disjoncteur $4_1$ reçoit une énergie de déclenchement $E_{d1}$ égale ou supérieure au seuil d'énergie de déclenchement $E_{th1}$, le déclencheur du disjoncteur $4_1$ provoque l'ouverture des contacts du disjoncteur électromécanique $4_1$ et interrompt le courant entre la source 3 et la charge 5, plus précisément entre le dispositif 10 et la charge 5. Autrement dit, lorsque l'énergie de déclenchement $E_{d1}$ est supérieure ou égale au seuil d'énergie de déclenchement $E_{th1}$, le disjoncteur électromécanique $4_1$ se déclenche. L'énergie de déclenchement $E_{d1}$ est fonction du temps t et de l'intensité I et n'est reçue que lorsque l'intensité I est strictement supérieure à une intensité minimale $I_{min1}$.

Il en est de même pour les disjoncteurs $4_2$ et $4_3$, qui se déclenchent lorsqu'ils ont respectivement reçu une énergie de déclenchement $E_{d2}$ et $E_{d3}$ supérieure ou égale au seuil d'énergie de déclenchement $E_{th2}$ et $E_{th3}$. L'énergie de déclenchement $E_{d2}$ n'est reçue que lorsque l'intensité I est strictement supérieure à une intensité minimale $I_{min2}$ et l'énergie de déclenchement $E_{d3}$ n'est reçue que lorsque l'intensité I est strictement supérieure à une intensité minimale $I_{min3}$.

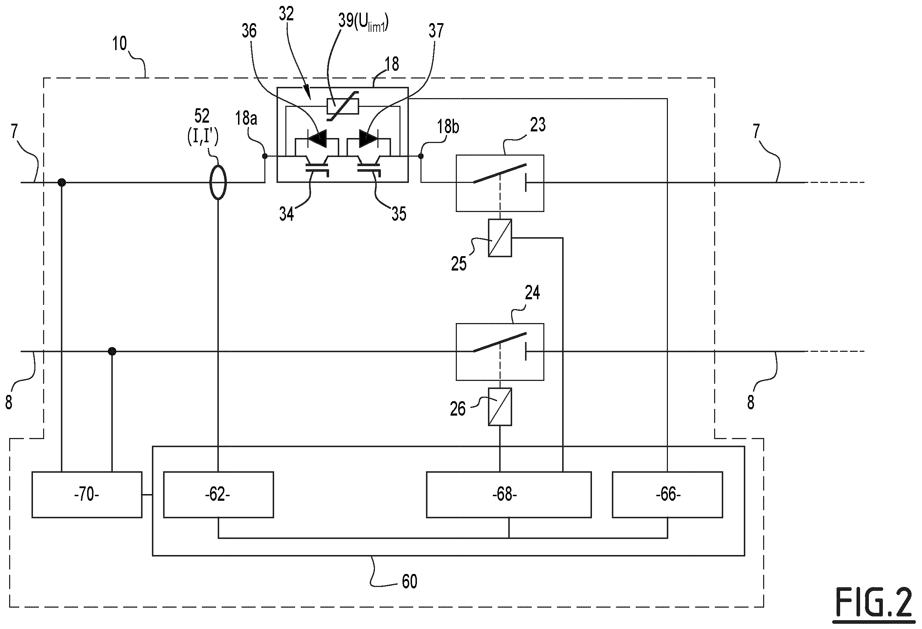

L'énergie de déclenchement $E_{d1}$ est inférieure à l'énergie de déclenchement $E_{d2}$, elle-même inférieure à l'énergie de déclenchement $E_{d3}$. Les énergies de déclenchement sont exprimées en unités arbitraires (UA). L'installation électrique 1 comprend également un dispositif de protection électrique 10, également appelé dispositif par la suite, connecté entre la source 3 et la série de disjoncteurs 4. Le dispositif 10 est détaillé sur la figure 2. Le dispositif 10 est configuré pour basculer entre une configuration armée, dans laquelle le dispositif 10 conduit le courant circulant entre la source 3 et la série de disjoncteurs électromécaniques 4, et une configuration déclenchée, dans laquelle le dispositif 10 isole électriquement la source 3 de la série de disjoncteurs électromécaniques 4. Le dispositif 10 a une tension U, exprimée en volts (V) et appliquée à ses bornes, entre les conducteurs 7 et 8.

Dans le mode de réalisation des figures 1 à 4, le dispositif 10 est un disjoncteur statique, aussi appelé SSCB, de l'anglais « Solid State Circuit Breaker ». Il comprend une cellule d'interruption 18 connectée en série au conducteur de phase 7 par une entrée 18a et une sortie 18b.

La cellule d'interruption 18 est configurée pour laisser passer ou pour interrompre le courant la traversant, ainsi qu'expliqué par la suite.

Le dispositif 10 comprend avantageusement un premier sectionneur 23 et, de manière optionnelle, un deuxième sectionneur 24, connectés respectivement au conducteur de phase 7 et au conducteur de neutre 8. En particulier, le sectionneur 23 est connecté au conducteur de phase 7 en série de la cellule d'interruption 18. Le sectionneur 24 est connecté en série au conducteur de neutre 8. Les sectionneurs 23 et 24 sont configurés pour basculer entre une configuration fermée dans laquelle les sectionneurs 23 et 24 conduisent le courant, et une configuration ouverte, dans laquelle les sectionneurs 23 et 24 ne conduisent pas le courant. Avantageusement, et ainsi que représenté sur la figure 2, le dispositif 10 comprend un actionneur 25 du premier sectionneur 23 et un actionneur 26 du deuxième sectionneur 24 qui, lorsqu'ils sont activés, interagissent respectivement avec le premier sectionneur 23 et le deuxième sectionneur 24 pour les faire basculer en configuration ouverte. Les actionneurs 25 et 26 sont, par exemple, des bobines et sont activés lorsqu'un courant circule dans les spires des bobines.

Les sectionneurs 23 et 24 sont configurés pour basculer en position ouverte en particulier lorsqu'aucun courant ne circule entre la source 3 et la charge 5, autrement dit, lorsque le courant a été interrompu par la cellule d'interruption 18.

La cellule d'interruption 18 comprend au moins un module de commutation, ici, un unique module de commutation 32. Le module de commutation 32 comprend au moins un élément semi-conducteur commandable en commutation, par exemple au moins un thyristor ou au moins un transistor, tel qu'un transistor à effet de champ, également appelé FET (de l'anglais Field Effect Transistor), un transistor à effet de champ à grille isolée, également appelé MOSFET (de l'anglais Metal Oxide Semiconductor Field Effect Transistor), un transistor bipolaire à grille isolée, également appelé IGBT (de l'anglais Insulated Gate Bipolar Transistor), ou une combinaison de ces différents éléments semi-conducteurs. Dans le mode de réalisation de la figure 2, la cellule d'interruption 18 comprend deux éléments semi-conducteurs 34 et 35. Les éléments semi-conducteurs 34 et 35 sont unidirectionnels en courant, et sont par exemple deux transistors de type IGBT. Le sens de conduction des transistors 34 et 35 est indiqué par une flèche sur chaque transistor 34, 35. Les transistors 34 et 35 sont connectés l'un à l'autre en anti-série, c'est-à-dire que les transistors 34 et 35 sont connectés en série mais tête-bêche, de sorte à ne pas conduire le courant en même temps. Deux diodes 36 et 37 sont connectées respectivement aux transistors 34 et 35. La diode 36 est connectée en anti-parallèle du transistor 34, c'est-à-dire que la diode 36 et le transistor 34 ne conduisent pas le courant électrique en même temps : si le transistor 34 est passant, la diode 36 est bloquée et inversement. Autrement dit, le transistor 34 et la diode 36 sont connectés en parallèle tête-bêche. Il en est de même pour le transistor 35 et la diode 37. Cette disposition permet au module de commutation 32 de conduire du courant alternatif sans interruption à chaque changement de signe du courant.

Le module de commutation 32 comprend un élément de limitation de tension 39, également appelé élément de limitation. L'élément de limitation de tension 39 est connecté en parallèle d'un ensemble formé par les transistors 34 et 35, et est par exemple une varistance à oxyde métallique, ou MOV (de l'anglais Metal Oxyde Varistor), une diode transil ou un éclateur à gaz. L'élément de limitation de tension 39 a une tension de limitation $U_{lim1}$, qui correspond à une tension à ses bornes lorsqu'il est traversé par le courant circulant entre la source 3 et la charge 5. La tension de limitation $U_{lim1}$ est supérieure à la tension réseau nominale $U_s$, par exemple de l'ordre de 1,5 fois la tension réseau nominale $U_s$. La tension de limitation $U_{lim1}$ forme un palier d'écrêtage $P_e$, qui est donc supérieur à la tension réseau nominale $U_s$.

Le module de commutation 32 est configuré pour basculer entre une configuration passante et une configuration bloquée. Dans la configuration passante, le courant circule dans l'un des transistors 34 ou 35. Plus précisément, lorsque le courant traversant le dispositif 10 est alternatif, le courant circule dans le transistor 34 et dans la diode 37, puis lorsque le courant change de sens, dans le transistor 35 et dans la diode 36.

Dans la configuration bloquée, les transistors 34 et 35 ne conduisent pas le courant et, si du courant circule dans le module de commutation 32, il circule à travers l'élément de limitation de tension 39.

Ainsi, dans la configuration bloquée, une tension aux bornes du module de commutation 32 est la tension de limitation $U_{lim1}$. Cette tension aux bornes du module de commutation 32 est alors également la tension U aux bornes du dispositif 10. Autrement dit, une contre-tension dont la valeur est celle de la tension de limitation $U_{lim1}$ est appliquée aux bornes du dispositif 10.

Le dispositif de contrôle 10 comprend également un capteur de courant 52. Le capteur de courant 52 est configuré pour mesurer une intensité I du courant et/ou une dérivée de l'intensité du courant circulant entre la source 3 et la charge 5, et en particulier le courant circulant dans le conducteur de phase 7. Le capteur de courant 52 est, par exemple, un tore de Rogowski.

Le dispositif de contrôle 10 comprend également une unité de contrôle 60, comprenant un module de traitement 62, connecté au capteur de courant 52 et configuré pour détecter un défaut électrique de type court-circuit en fonction de l'intensité I, mesurée par le capteur de courant 52.

L'unité de contrôle 60 comprend également un module de commande de cellule 66 et, avantageusement, un module de commande de sectionneurs 68, connectés au module de traitement 62 et respectivement configurés pour commander la cellule d'interruption 18, plus précisément le module de commutation 32, et les sectionneurs 23 et 24.

Le module de commande de cellule 66, aussi appelé module de commande, est configuré pour commander le module de commutation 32 en configuration passante et en configuration bloquée, comme expliqué plus en détail par la suite, en particulier en actionnant la gâchette des transistors 34 et 35.

Le module de commande de sectionneurs 68 est avantageusement configuré pour actionner respectivement les actionneurs 25 et 26, afin de basculer les sectionneurs 23 et 24 en configuration ouverte.

L'unité de contrôle 60 est un circuit électronique conçu pour manipuler et/ou transformer des données représentées par des quantités électroniques ou physiques dans des registres de l'unité de contrôle 60 et/ou des mémoires, en d'autres données similaires correspondant à des données physiques dans les mémoires de registres ou d'autres types de dispositifs d'affichage, de dispositifs de transmission ou de dispositifs de mémorisation.

En tant qu'exemples spécifiques, l'unité de contrôle 60 est réalisée sous forme d'un composant logique programmable, tel qu'un FPGA (de l'anglais Field Programmable Gate Array), ou encore d'un circuit intégré, tel qu'un ASIC (de l'anglais Application Specific Integrated Circuit).

En variante non représentée, l'unité de contrôle 60 comprend une unité de traitement d'informations formée par exemple d'une mémoire et d'un processeur associé à la mémoire. Le module de traitement 62, le module de commande de cellule 66 et le module de commande de sectionneurs 68 sont réalisés chacun sous forme d'un logiciel, ou d'une brique logicielle, exécutable par le processeur. La mémoire de l'unité de contrôle 60 est alors apte à stocker un logiciel de traitement, un logiciel de commande de cellule et un logiciel de commande de sectionneurs. Le processeur est alors apte à exécuter chacun des logiciels parmi le logiciel de traitement, le logiciel de commande de cellule et le logiciel de commande de sectionneurs.

En variante non représentée, le module de traitement 62, le module de commande de cellule 66 et le module de commande de sectionneurs 68 sont réalisés chacun sous forme d'un composant logique programmable, tel qu'un FPGA, ou encore d'un circuit intégré, tel qu'un ASIC.

De manière avantageuse, le dispositif 10 comprend également un module d'alimentation 70, connecté aux conducteurs 7 et 8 et à l'unité de contrôle 60, afin d'alimenter en électricité l'unité de contrôle 60. En variante, le module d'alimentation 70 est connecté à un circuit externe, non relié aux conducteurs 7 et 8.

Un procédé de commande du dispositif 10 conforme à l'invention va maintenant être expliqué, en regard des figures 3 à 5.

Initialement, de manière avantageuse, le dispositif 10 est en configuration armée, c'est-à-dire que les sectionneurs 23 et 24 sont en configuration fermée et le module de commutation 32 est en configuration passante. Le courant circule de la source 3 vers le disjoncteur mécanique 4, en passant par le module de commutation 32. La tension U aux bornes du dispositif 10 est nulle ou sensiblement nulle. Tous les disjoncteurs $4_1$, $4_2$, $4_3$ sont en configuration armée et conduisent le courant.

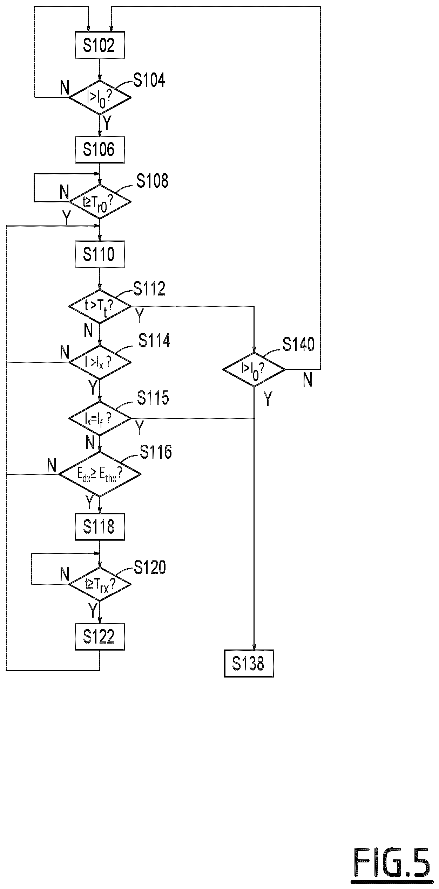

Le capteur de courant 52 mesure l'intensité I du courant et/ou la dérivée I' de l'intensité I circulant dans le conducteur de phase 7, à l'étape S102 de la méthode représentée à la figure 5.

Afin de distinguer un court-circuit d'un défaut furtif, qui peut également causer une augmentation brusque et importante de l'intensité I, causé par exemple par la chute d'une clé sur un jeu de barres, ou par un dysfonctionnement transitoire et qui disparaît de lui-même en quelques centaines de microsecondes, le procédé de commande comporte avantageusement les étapes S104 à S112.

L'unité de contrôle 60 reçoit la mesure de l'intensité I et/ou la dérivée de l'intensité et détecte, à l'étape S104 et via le module de traitement 62, si un défaut électrique, correspondant à un potentiel court-circuit, est présent entre la source 3 et la charge 5. Pour cela, le module de traitement 62 compare l'intensité I mesurée à un seuil de courant de défaut furtif $I_0$. Si l'intensité I est inférieure ou égale au seuil de courant de défaut furtif $I_0$, le capteur de courant 52 effectue à nouveau l'étape S102 et continue de mesurer l'intensité I du courant. Un fonctionnement itératif est alors mis en œuvre.

Si l'intensité I est strictement supérieure au seuil de courant de défaut furtif $I_0$, alors le module de commande de cellule 66 commande en configuration bloquée chaque module de commutation, ici l'unique module de commutation 32, à l'étape S106, ainsi que visible sur la figure 4, à l'instant A. La tension U devient égale au palier d'écrêtage $P_e$ et l'intensité I décroit jusqu'à devenir nulle à un instant B. Lorsque l'intensité I devient nulle, la tension U aux bornes du dispositif 10 devient égale à la tension réseau nominale $U_s$.

En variante non représentée, lors de l'étape S106, le module de commande de cellule 66 commande chaque module de commutation, ici l'unique module de commutation 32, en configuration bloquée lorsque la dérivée I' de l'intensité I en fonction du temps t est strictement supérieure à un seuil de dérivée de défaut prédéterminé, ou encore si une combinaison de conditions sur l'intensité I et sa dérivée I' sont remplies, par exemple l'intensité I est strictement supérieure au seuil de courant de défaut furtif $I_0$ et la dérivée de l'intensité I est strictement supérieure au seuil de dérivée de défaut.

L'unité de contrôle 60 attend à l'étape S108 que la durée de reconduction du défaut furtif $T_{r0}$, décomptée à partir du moment où le module de commande de cellule 66 commande en configuration bloquée le module de commutation 32, soit écoulée. La durée de reconduction du défaut furtif $T_{r0}$ est avantageusement prédéterminée et programmée à l'avance par le constructeur du dispositif 10. Elle est, par exemple, inférieure ou égale à 500 μs.

Lorsque la durée de reconduction du défaut furtif $T_{r0}$ est écoulée, le module de commutation 66 effectue l'étape S110 lors de laquelle il commande en configuration passante chaque module de commutation, ici le module de commutation 32, à un instant C. Le courant circule donc à nouveau entre la source 3 et la charge 5 et la tension U devient nulle. Cette mise en configuration passante du module 32 permet de tester si le défaut détecté à l'étape S104 a disparu ou s'il est encore présent.

Le module de traitement 62 détermine si une durée de test $T_t$, mesurée à partir de l'instant C, est écoulée à l'étape S112. Si la durée de test $T_t$ n'est pas écoulée, le module de traitement 62 considère, à l'étape S114, qu'un court-circuit est détecté si l'intensité I du courant mesurée par le capteur de courant 52 est strictement supérieure au seuil de courant de défaut $I_1$ du disjoncteur $4_1$, qui est le disjoncteur de la série de disjoncteurs 4 en configuration armée le plus en aval.

En variante, le court-circuit est considéré comme détecté à l'étape S114 si la dérivée I' de l'intensité I est strictement supérieure à un seuil prédéterminé, ou encore si une combinaison de conditions sur l'intensité I et sa dérivée sont remplies, par exemple l'intensité I est strictement supérieure au seuil de courant de défaut $I_1$ et la dérivée I' de l'intensité I est strictement supérieure au seuil prédéterminé.

Si l'intensité I du courant mesurée par le capteur de courant 52 est inférieure ou égale au seuil de courant de défaut $I_1$ du disjoncteur $4_1$, le module de traitement 62 effectue à nouveau l'étape S112. Un fonctionnement itératif est alors mis en oeuvre.

Si la durée de test $T_t$ est écoulée, sans que l'intensité I soit devenue strictement supérieure au seuil de courant de défaut $I_1$, alors le défaut électrique détecté à l'étape S104 était un défaut furtif. Le procédé est réinitialisé et le dispositif 10 effectue à nouveau l'étape S102. Un fonctionnement itératif est alors mis en oeuvre.

Si l'intensité I du courant mesurée par le capteur de courant 52 à l'étape S114 est strictement supérieure au seuil de courant de défaut $I_1$ du disjoncteur $4_1$, ainsi que représenté à un instant D sur la figure 4, alors l'unité de contrôle 60 détermine que le seuil de courant de défaut $I_1$ utilisé à l'étape S114 est différent d'un seuil de courant de défaut $I_2$ lors d'une étape S115. L'unité de contrôle 60 estime ensuite l'énergie de déclenchement $E_{d1}$ et la compare au seuil d'énergie de déclenchement $E_{th1}$ à l'étape S116. Avantageusement, l'énergie de déclenchement $E_{d1}$ est estimée seulement lorsque l'intensité I est strictement supérieure à l'intensité minimale $I_{min1}$. De manière avantageuse, et ainsi que représenté sur les figures 3 et 4, l'intensité minimale $I_{min1}$ est égale au seuil de déclenchement $I_1$. Si l'énergie de déclenchement $E_{d1}$ est inférieure au seuil d'énergie de déclenchement $E_{th1}$, alors l'unité de contrôle 60 effectue à nouveau l'étape S112 et un fonctionnement itératif est mis en oeuvre. Si l'énergie de déclenchement $E_{d1}$ est supérieure ou égale au seuil d'énergie de déclenchement $E_{th1}$, ce qui est le cas à un instant E de la figure 4, alors le disjoncteur $4_1$ se déclenche, et si le défaut est en aval du disjoncteur $4_1$, isole le défaut. Le module de commande de cellule 66 commande alors le module 32 en configuration bloquée à l'étape S118, visible à l'instant E sur la figure 4. La tension U devient égale au palier d'écrêtage $P_e$ et l'intensité I diminue jusqu'à devenir sensiblement nulle à un instant F. Lorsque l'intensité I devient nulle, la tension U devient égale à la tension réseau nominale $U_s$.

L'unité de contrôle 60 attend qu'une durée de reconduction $T_{r1}$, mesurée à partir de l'instant E, soit écoulée à l'étape S120. La durée de reconduction $T_{r1}$ est avantageusement prédéterminée et programmée à l'avance par le constructeur du dispositif 10.

Lorsque la durée de reconduction $T_{r1}$ est écoulée, le module de commande de cellule 66 commande le module 32 en configuration passante à l'étape S122, correspondant à un instant G sur la figure 4. Le courant circule donc à nouveau entre la source 3 et le disjoncteur $4_2$, le disjoncteur $4_1$ a été déclenché si le défaut était en aval de ce dernier, et la tension U aux bornes du dispositif 10 devient nulle. Cette mise en configuration passante du module 32 permet de tester si le défaut détecté à l'étape S114 a disparu, c'est-à-dire si le défaut était situé entre le disjoncteur $4_1$ et la charge 5, ou si le défaut est encore présent et est donc situé en amont du disjoncteur $4_1$.

Le disjoncteur $4_2$ étant connecté immédiatement en amont du disjoncteur $4_1$, le module de traitement 62 effectue alors une deuxième itération des étapes S112 à S122, le seuil de courant de défaut, le seuil d'énergie de déclenchement et la durée de reconduction utilisées dans la suite du processus décrit ci-dessous deviennent ceux associés au disjoncteur $4_2$, qui est le disjoncteur en configuration armée immédiatement en amont du disjoncteur $4_1$, c'est-à-dire le seuil de courant de défaut $I_2$, le seuil d'énergie de déclenchement $E_{th2}$ et la durée de reconduction $T_{r2}$. Le disjoncteur $4_2$ est le nouveau disjoncteur de la série de disjoncteurs 4 en configuration armée et connecté le plus en aval.

Le module de traitement 62 détermine à l'étape S112 si la durée de test $T_t$, mesurée à partir de l'instant G, est écoulée. Si la durée de test $T_t$ n'est pas écoulée, le module de traitement 62 détecte à l'étape S114 si l'intensité $I$ du courant mesurée par le capteur de courant 52 est inférieure ou égale ou strictement supérieure au seuil de courant de défaut $I_2$ du disjoncteur $4_2$, autrement dit, si le court-circuit est toujours présent.

Si l'intensité $I$ du courant mesurée par le capteur de courant 52 est inférieure ou égale au seuil de courant défaut $I_2$ du disjoncteur $4_2$, le module de traitement 62 effectue à nouveau l'étape S112, et un fonctionnement itératif est alors mis en oeuvre.

Si l'intensité $I$ du courant mesurée par le capteur de courant 52 est détectée à l'étape S114 comme strictement supérieure au seuil de courant de défaut $I_2$ du disjoncteur $4_2$, ce qui correspond à un instant H sur la figure 4, cela signifie que le défaut est situé en amont du disjoncteur $4_1$, et qu'il est toujours présent. L'unité de contrôle 60 détermine que le seuil de courant de défaut $I_2$ est différent d'un seuil de courant de défaut final $I_f$ et le dispositif 10 effectue l'étape S116, en calculant l'énergie de déclenchement $E_{d2}$ et en la comparant avec le seuil de déclenchement $E_{th2}$. L'énergie de déclenchement $E_{d2}$ est représentée en pointillés aux figures 3 et 4 sur le graphe d'énergie $E_d$.

Lorsque l'énergie de déclenchement $E_{d2}$ est supérieure ou égale au seuil d'énergie $E_{th2}$, les étapes S118, S120 et S122 sont effectuées successivement. Comme le disjoncteur $4_3$ est connecté immédiatement en amont du disjoncteur 42, le module de traitement 62 effectue alors une troisième itération des étapes S112 à S122, en utilisant le seuil de courant de défaut $I_3$ du disjoncteur $4_3$ et le cas échéant, en calculant l'énergie de déclenchement $E_{d3}$ et en utilisant le seuil de déclenchement $E_{th3}$, les intensités maximale $I_{max3}$ et minimale $I_{min3}$ et la durée de reconduction $T_{r3}$.

Dans l'exemple des figures 3 et 4, lors de la troisième itération de l'étape S114 l'intensité $I$ du courant mesurée par le capteur de courant 52 est strictement supérieure au seuil de courant de défaut $I_3$ du disjoncteur $4_3$, correspondant à un instant L sur la figure 3. Le défaut est donc situé en amont du disjoncteur $4_2$ et est toujours présent. Le dispositif 10 effectue donc les étapes S115, S320 et S118 à S122. L'énergie de déclenchement $E_{d3}$ est représentée en trait plein à la figure 3 sur le graphe d'énergie $E_d$. La figure 5 représente le procédé de commande du dispositif 10, avec $I_x$, $E_{dx}$, $E_{thx}$ et $T_{rx}$ respectivement le courant de défaut, l'énergie de déclenchement, le seuil de déclenchement et la durée de reconduction pour l'itération x, avec x égal à 1, 2 ou 3.

En variante non représentée, l'installation 1 comprend plus de trois disjoncteurs. Dans ce cas, les étapes S112 à S122 continuent d'être itérées tant que des disjoncteurs sont connectés immédiatement en amont du disjoncteur déclenché en dernier.

Lorsque la troisième itération est effectuée, suite à l'étape S122, le module de traitement 62 effectue alors l'étape S112 dans laquelle le module de traitement 62 détermine si la durée de test $T_t$, mesurée à partir de l'instant ou la durée de reconduction $T_{r3}$ est écoulée, correspondant à un instant P, est écoulée.

Si la durée de test $T_t$ n'est pas écoulée, le module de traitement 62 détecte à l'étape S114 si l'intensité $I$ du courant mesurée par le capteur de courant 52 est strictement supérieure au seuil de courant de défaut final $I_f$, autrement dit, si le court-circuit est toujours présent.

Si la durée de test $T_t$ est écoulée sans que l'intensité $I$ du courant mesurée par le capteur de courant 52 soit devenue strictement supérieure au seuil de courant de défaut final $I_f$, alors le processus est réinitialisé, et l'étape S102 est effectuée à nouveau.

Si l'intensité $I$ du courant mesurée par le capteur de courant 52 est inférieure ou égale au seuil de courant de défaut final $I_f$, le module de traitement 62 effectue à nouveau l'étape S112, et un fonctionnement itératif est alors mis en œuvre.

Si l'intensité $I$ du courant mesurée par le capteur de courant 52 est strictement supérieure au seuil de courant de défaut final $I_f$, ce qui correspond à un instant Q sur la figure 4, cela signifie que le défaut est situé entre le disjoncteur $4_3$ et le dispositif 10, et qu'il est toujours présent. Lors de l'étape S115, l'unité de contrôle 60 détermine que le seuil de courant de défaut utilisé à l'étape S114 précédente est égal au seuil de courant de défaut final $I_f$.

Le module de commande de cellule 66 effectue alors une étape S138, dans laquelle il commande tous les modules de commutation, ici le module 32, en configuration bloquée. Le courant est ainsi interrompu par le dispositif 10.

De manière optionnelle, une fois l'intensité $I$ du courant devenue nulle suite à l'étape S138, le module de commande de sectionneurs 68 commande les sectionneurs 23 et 24 en configuration bloquée, afin de réaliser une isolation galvanique du dispositif 10.

En variante non représentée, le seuil de courant défaut final $I_f$ est égal au seuil de courant de défaut $I_3$. Dans ce cas, lors de l'étape S115, l'unité de contrôle 60 détermine le nombre de fois que le même seuil de défaut est utilisé et n'effectue l'étape S138 que si ce nombre est supérieur à un.

De manière avantageuse, si lors de l'étape S112, la durée test est écoulée sans que le seuil de courant $I_1$, $I_2$, $I_3$ ou $I_f$ n'ait été dépassé, l'unité de contrôle 60 effectue une étape S140, lors de laquelle elle compare l'intensité $I$ au seuil de courant de défaut furtif $I_0$. Si l'intensité est strictement supérieure au seuil de défaut furtif $I_0$, alors le module de commande de cellule 66 effectue l'étape S138. Sinon, le processus est réinitialisé, et l'étape S102 est effectuée à nouveau.

En variante non représentée, lors de l'étape S140, l'unité de contrôle 60 compare la dérivée $I'$ de l'intensité $I$ en fonction du temps t à un seuil de dérivée de défaut prédéterminé, ou encore détermine si une combinaison de conditions sur l'intensité $I$ et sa dérivée $I'$ sont remplies, par exemple l'intensité $I$ est strictement supérieure au seuil de courant de défaut furtif $I_0$ et la

dérivée de l'intensité I est strictement supérieure au seuil de dérivée de défaut. Dans ce cas, le module de commande de cellule 66 effectue l'étape S138 si la dérivée I' est strictement supérieure au seuil de dérivée de défaut prédéterminé ou si les conditions sur l'intensité I et sa dérivée I' sont remplies.

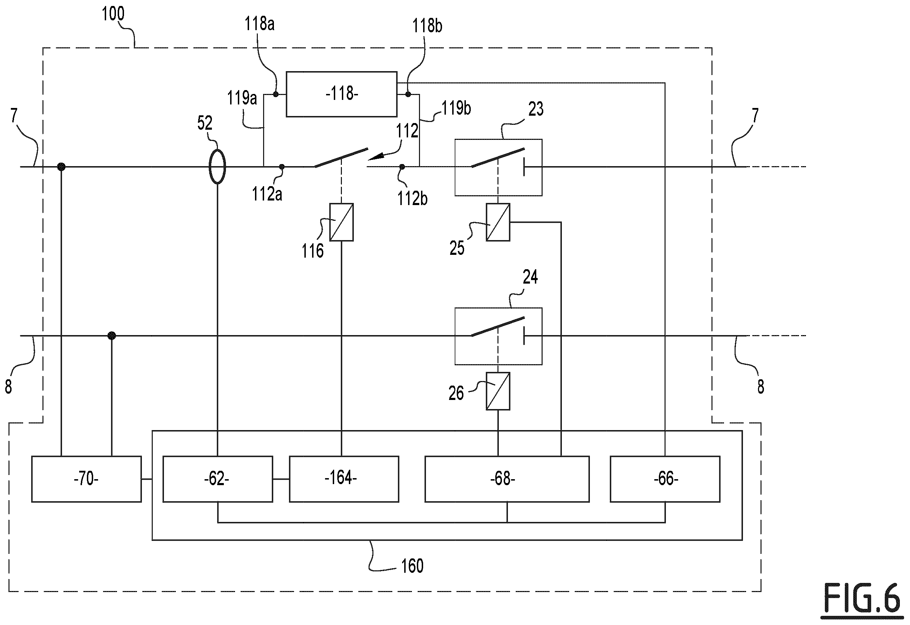

La figure 6 représente une installation électrique 1, qui diffère de l'installation électrique de la figure 1 par son dispositif 100, qui remplace le dispositif 10. Les éléments du dispositif 100 identiques à ceux du dispositif 10 ou identifiés dans la figure 6 par les mêmes signes de référence sont similaires, au moins fonctionnellement, à ceux du dispositif 10 et ne sont pas décrits en détail.

Les disjoncteurs $4_1, 4_2, 4_3$ sont en outre chacun associés à l'intensité minimale, respectivement $I_{min1}$, $I_{min2}$ et $I_{min3}$, ici égale aux seuils de courant de défaut respectifs $I_1, I_2, I_3$ et à une intensité maximale, respectivement $I_{max1}, I_{max2}$ et $I_{max3}$.

Le dispositif 100 est un disjoncteur hybride, et comprend un interrupteur mécanique 112, également connu sous le nom d'interrupteur de bypass, ou d'interrupteur mécanique rapide, également appelé FMS (de l'anglais Fast Mechanical Switch). L'interrupteur mécanique 112 est connecté en série au conducteur de phase 7, par une entrée 112a et une sortie 112b, et est configuré pour basculer entre une configuration fermée, dans laquelle il conduit le courant circulant entre la source 3 et la charge 5, et une configuration ouverte, dans laquelle il ne conduit pas le courant. Sur la figure 6, l'interrupteur mécanique 112 est représenté en configuration ouverte. Le dispositif 100 comprend avantageusement un actionneur 116 qui, lorsqu'il est activé, bascule l'interrupteur mécanique 112 en configuration ouverte.

Le dispositif 100 comprend une cellule d'interruption 118, connectée en parallèle de l'interrupteur mécanique 112, de telle sorte que l'entrée 112a et la sortie 112b de l'interrupteur mécanique 112 sont connectées respectivement à une entrée 118a et à une sortie 118b de la cellule d'interruption 118. Plus spécifiquement, l'entrée 112a de l'interrupteur mécanique 112 et l'entrée 118a de la cellule d'interruption 118 sont connectées par une liaison électrique 119a, qui est non interruptible et la sortie 112b de l'interrupteur mécanique 112 est connectée à la sortie 118b de la cellule d'interruption 118 par une liaison électrique 119b, qui est également non interruptible. Autrement dit, les liaisons électriques 119a et 119b sont chacune un câble ou un fil électrique ; aucune des liaisons électriques 119a et 119b ne comprennent d'interrupteur ou plus généralement de moyen d'interruption du courant électrique. La cellule d'interruption 118 est configurée pour laisser passer ou pour interrompre le courant la traversant, ainsi qu'expliqué par la suite.

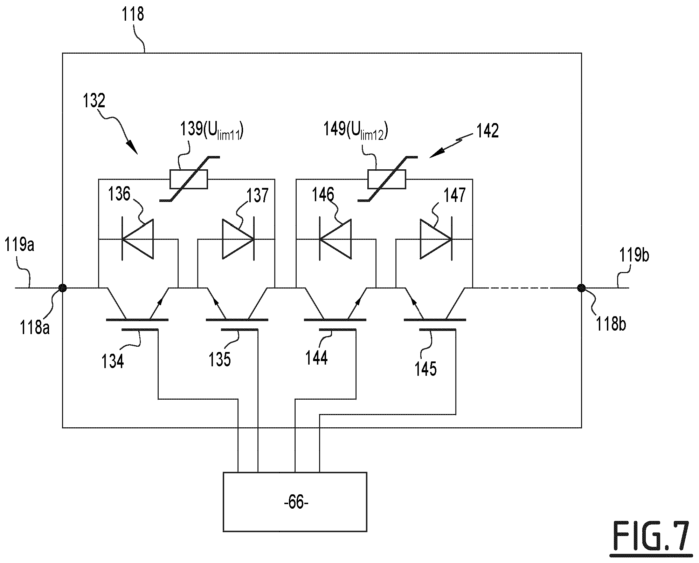

La cellule d'interruption 118 comprend N modules de commutation ; par exemple la cellule d'interruption 118 comprend N=2 deux modules de commutation 132 et 142, ainsi que visible à la figure 7. En variante, les modules de commutation sont au nombre de trois ou plus, ainsi que symbolisé par la ligne en pointillés à la figure 7.

Les modules de commutation 132 et 142 sont connectés en série les uns aux autres.

Dans l'exemple de la figure 5, le module de commutation 132 est similaire, au moins fonctionnellement, au module de commutation 32 et comprend à ce titre deux transistors 134, 135 connectés en anti-série, deux diodes 136 et 137 respectivement connectées en anti-parallèle des transistors 134 et 135, et un élément de limitation 139, ayant une tension de limitation $U_{lim11}$. Les transistors 144, 145 et les diodes 146 et 147 du module de commutation 142 sont respectivement similaires, au moins fonctionnellement, aux transistors 134, 135 et aux diodes 136 et 137 du module de commutation 132. Le module de commutation 142 comprend un élément de limitation 149, connecté en parallèle d'un ensemble formé par les transistors 144 et 145 et a une tension de limitation $U_{lim12}$, qui est différente de la tension de limitation $U_{lim11}$.

La tension de limitation $U_{lim11}$ est par exemple égale à 0,5 fois $U_s$ et la tension de limitation $U_{lim12}$ est par exemple égale à 1,5 fois $U_s$.

Ainsi, dans la configuration bloquée, les tensions aux bornes des modules de commutation 132 et 142 sont respectivement la tension de limitation $U_{lim11}$ et la tension de limitation $U_{lim12}$.

Les tensions de limitation $U_{lim11}$ et $U_{lim12}$ forment au moins $2^N$-1 paliers, distincts les uns des autres. Ici, le nombre Np de paliers est égal à Np= $2^N$-1, où N est le nombre de modules de commutation. Les paliers sont formés par les tensions de limitation $U_{lim11}$ et $U_{lim12}$ prises seules, ou sommées l'une à l'autre. La liste des paliers obtenus est représentée dans la table ci-dessous. Pour N=2 modules de commutation, trois paliers distincts P1, P2, P3 sont obtenus, avec 3 = $2^2$-1. Ici, P1 est le palier avec la valeur la plus faible, égale à $U_{lim11}$ qui vaut par exemple $0,5U_s$, P2 est supérieur à P1, et a une valeur égale à $U_{lim12}$ qui vaut par exemple $1,5U_s$, et P3 est supérieur à P2, avec une valeur égale la somme de $U_{lim11}$ et $U_{lim12}$, par exemple $2U_s$.

[Table 1]

| Palier | Valeur |
|--------|--------|
| P1 | $U_{lim11}$ |
| P2 | $U_{lim12}$ |
| P3 | $U_{lim11} + U_{lim12}$ |

Le palier P1 est également appelé palier de limitation. Le palier P2 est le plus petit palier supérieur à la tension réseau nominale $U_s$, et est appelé le palier d'écrêtage $P_e$.

Le dispositif de contrôle 100 comprend une unité de contrôle 160, qui diffère de l'unité de contrôle 60 en ce qu'elle comprend en outre un module de commande d'interrupteur mécanique 164.

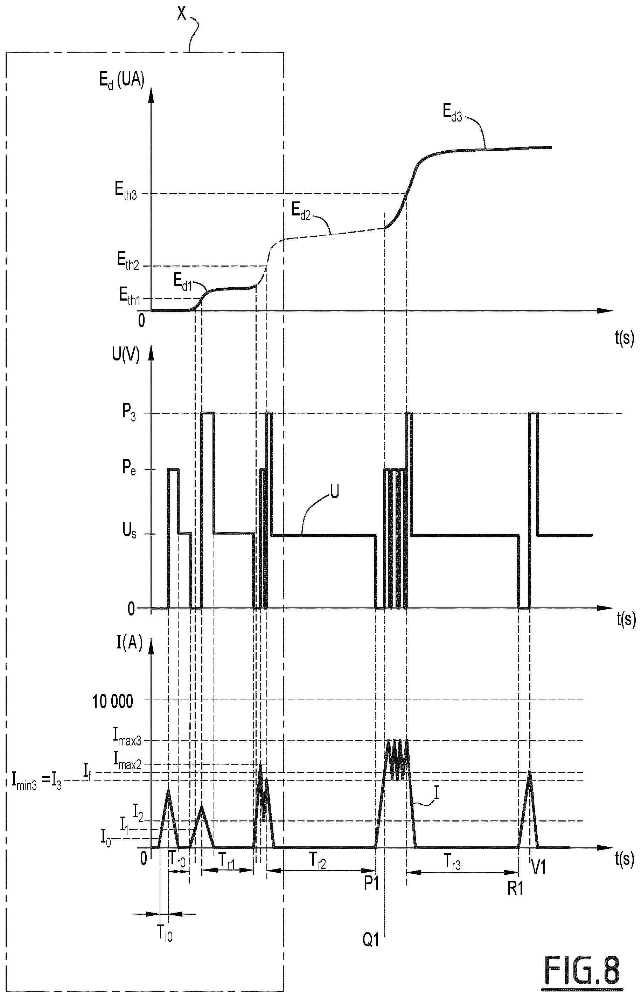

Un procédé de commande du dispositif 100 va maintenant être expliqué, en regard des figures 8 à 10. Les étapes identiques au procédé de commande précédemment décrites sont référencées avec les mêmes signes de références.

Initialement, de manière avantageuse, le dispositif 100 est en configuration armée, c'est-à-dire que les sectionneurs 23 et 24 sont en configuration fermée, l'interrupteur mécanique 112 est en configuration fermée, et les transistors 134, 135, 144 et 145 sont passants. A cause d'une résistance interne inférieure à celle des transistors 134, 135, 144 et 145, l'interrupteur mécanique 112 conduit l'ensemble du courant électrique circulant dans le dispositif 100. Une tension U aux bornes du dispositif 100 est nulle, ou sensiblement nulle.

Le capteur de courant 52 mesure l'intensité I du courant circulant dans le conducteur de phase 7, lors d'une étape S102.

L'unité de contrôle 160 reçoit la mesure de l'intensité I et détecte, via le module de traitement 62, si un défaut électrique, correspondant à un potentiel court-circuit est présent entre la source 3 et la charge 5, à l'étape S104. Pour cela, le module de traitement 62 compare l'intensité I mesurée à un seuil de courant de défaut furtif $I_0$. Si l'intensité I est inférieure ou égale au seuil de courant de défaut furtif $I_0$, le capteur de courant 52 effectue à nouveau l'étape S102 et continue de mesurer l'intensité I du courant. Un fonctionnement itératif est alors mis en œuvre.

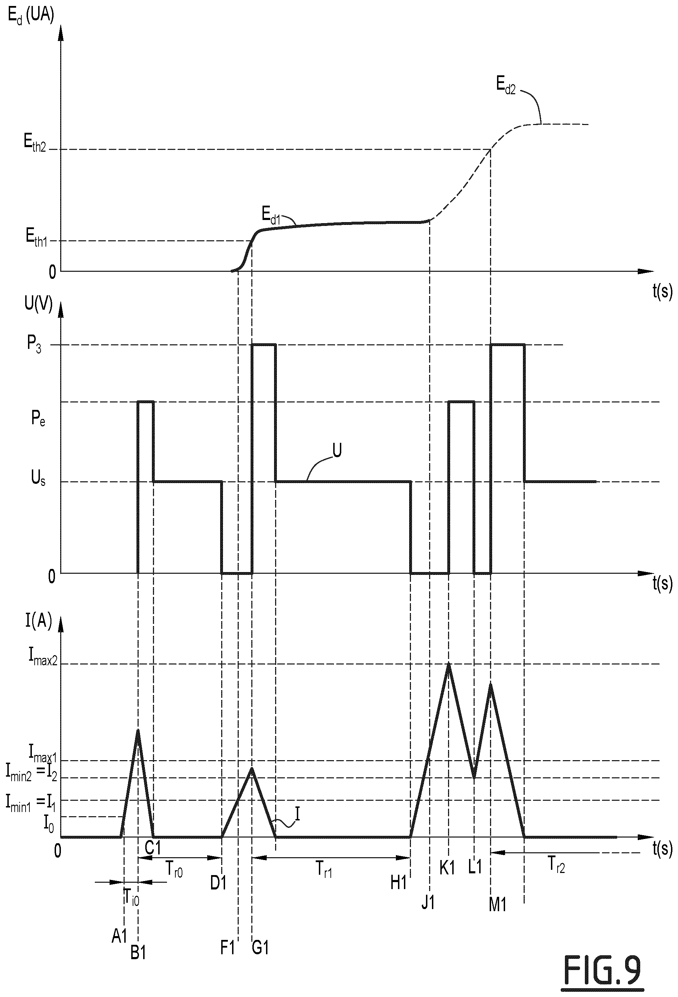

Si l'intensité I est strictement supérieure au seuil de courant de défaut furtif $I_0$, ce qui correspond à un instant A1 sur la figure 9, alors le module de commande d'interrupteur mécanique 164 commande l'interrupteur mécanique 112 en basculement dans la configuration ouverte à l'étape S306.

Lorsque l'interrupteur mécanique 112 est en configuration ouverte, le courant électrique est transféré de l'interrupteur mécanique 112 à la cellule d'interruption 118, les transistors 134, 135, 144 et 145 étant commandés en configuration passante. Cependant, l'ouverture de l'interrupteur mécanique 112 génère un arc électrique et une ionisation du milieu entre des contacts de l'interrupteur mécanique 112. Cela diminue une tenue diélectrique de l'interrupteur mécanique 112. Ainsi, avant de réduire ou d'interrompre le courant circulant entre la source 3 et la charge 5, il est nécessaire d'attendre un rétablissement d'une tenue diélectrique de l'interrupteur mécanique 112 suffisante. Sinon l'interrupteur mécanique 112 risque de claquer, c'est-à-dire de devenir conducteur tout en étant en configuration ouverte, ce qui entraîne l'endommagement de l'interrupteur mécanique 112. Le dispositif 100 ne pourra alors ni réduire ni interrompre le courant. Cette durée d'attente correspond à la durée d'isolation $T_{i0}$ au bout de laquelle la tenue diélectrique de l'interrupteur mécanique 112 a suffisamment augmenté pour devenir supérieure au palier P3. La durée d'isolation $T_{i0}$ est avantageusement prédéterminée et programmée par le constructeur du dispositif 10.

En variante, lors de l'étape S306, le module de commande de cellule 166 commande le module de commutation formant le plus grand palier inférieur à la tenue diélectrique de l'interrupteur mécanique 112. Ainsi, les modules de commutation formant les paliers P1, puis P2 sont commandés en configuration bloquée dès que la tenue diélectrique devient supérieure à ces paliers. Cela permet de limiter un accroissement de l'intensité I le temps que la tenue diélectrique devienne supérieure au palier P3.

L'unité de contrôle 160 attend donc que la durée d'isolation $T_{i0}$ soit écoulée à l'étape S308.

Lorsque la durée d'isolation $T_{i0}$ est écoulée, ce qui correspond à un instant B1 sur la figure 9, le module de commande de cellule 66 commande tous les modules de commutation 132, 142 en configuration bloquée à l'étape S106. La tension U devient égale au troisième palier P3, autrement dit au palier d'écrêtage $P_e$, et l'intensité I diminue jusqu'à devenir nulle, à un instant C1. Lorsque l'intensité I est devenue nulle, la tension U devient égale à la tension réseau nominale $U_s$.

L'unité de contrôle 160 attend que la durée de reconduction du défaut furtif $T_{r0}$, décomptée à partir de l'instant A1, soit écoulée à l'étape S108.

Lorsque la durée de reconduction du défaut furtif $T_{r0}$ est écoulée, le module de commande de cellule 66 commande les modules 132 et 142 dans l'état passant, correspondant à l'instant D1 sur la figure 9 à l'étape S110. Le courant circule donc à nouveau entre la source 3 et la charge 5 et la tension U devient nulle.

En variante non représentée, à l'instant D1, le module de commande de cellule 66 commande les modules formant le palier de limitation P1 dans l'état bloqué et les autres dans l'état passant.

Le module de traitement 62 détermine si la durée de test $T_t$, mesurée à partir de l'instant D1, est écoulée à l'étape S112. Si la durée de test $T_t$ n'est pas écoulée, le module de traitement 62 détecte à l'étape S114 un court-circuit, si l'intensité I du courant mesurée par le capteur de courant 52 est inférieure ou égale ou strictement supérieure au seuil de courant de défaut $I_1$ du disjoncteur $4_1$, qui est le disjoncteur en configuration armée le plus en aval de la série de disjoncteurs 4.

En variante, le court-circuit est détecté si la dérivée I' de l'intensité I par rapport au temps t est strictement supérieure à un seuil de dérivée de défaut prédéterminé, ou encore si une combinaison de conditions sur l'intensité I et sa dérivée I' sont remplies, par exemple l'intensité I est strictement supérieure au seuil de courant de défaut $I_1$ et la dérivée I' de l'intensité I est strictement supérieure au seuil de dérivée de défaut.

Si l'intensité I du courant mesurée par le capteur de courant 52 est inférieure ou égale au seuil de courant de défaut $I_1$ du disjoncteur $4_1$, le module de traitement 62 effectue à nouveau l'étape S112. Un fonctionnement itératif est alors mis en oeuvre.

Si la durée de test $T_t$ est écoulée sans que l'intensité I ait franchi le seuil de courant de défaut $I_1$, alors l'unité de contrôle 60 effectue l'étape S140, lors de laquelle elle compare l'intensité I au seuil de courant de défaut furtif $I_0$. Si l'intensité I est strictement supérieure au seuil de défaut furtif $I_0$, alors le module de commande de cellule 66 effectue l'étape S138, dans laquelle il commande tous les modules de commutation, ici les modules 132 et 134, en configuration bloquée. Le courant est ainsi interrompu par le dispositif 10. Sinon, le défaut électrique détecté à l'étape S104 était un défaut furtif et a disparu. Le module de commande d'interrupteur mécanique 164 commande alors le basculement de l'interrupteur mécanique 112 en configuration fermée à l'étape S317. Puis le procédé est réinitialisé et le dispositif 10 effectue à nouveau l'étape S102.

Si l'intensité I du courant mesurée par le capteur de courant 52 à l'étape S114 est strictement supérieure au seuil de courant de défaut $I_1$ du disjoncteur $4_1$, ainsi que représenté à un instant F1, alors l'unité de contrôle 160 détermine que le seuil de courant de défaut utilisé à l'étape S114 est différent du seuil de défaut final à l'étape S115. L'unité de contrôle 160 estime alors une énergie de déclenchement $E_{d1}$ et la compare à un seuil d'énergie de déclenchement $E_{th1}$ lors d'une étape S320. L'étape S320 comprend une pluralité de sous-étapes S322 à S330.

Lors de la sous-étape S322, le module de traitement 62 détermine si l'énergie de déclenchement $E_{d1}$, représentée en trait plein aux figures 8 et 9 sur le graphe d'énergie $E_d$, est strictement inférieure au seuil d'énergie de déclenchement $E_{th1}$, alors le module de traitement 62 détermine si l'intensité I mesurée par le capteur de courant 52 est strictement supérieure à l'intensité minimale $I_{min1}$, ici égale au seuil de courant de défaut $I_1$, lors de la sous-étape S324.

Si l'intensité I est strictement supérieure au seuil d'intensité minimale $I_{min1}$, ce qui est le cas entre l'instant F1 et un instant G1, alors le module de traitement 62 détermine si l'intensité I est supérieure ou égale à un seuil d'intensité maximale $I_{max1}$, lors de la sous-étape S326. Si l'intensité I est strictement inférieure au seuil d'intensité maximale $I_{max1}$, alors le module de traitement 62 effectue à nouveau la sous-étape S112 et un fonctionnement itératif est alors mis en oeuvre.

Si lors de la sous-étape S322, le module de traitement 62 détermine que l'énergie de déclenchement $E_{d1}$ est supérieure ou égale au seuil d'énergie de déclenchement $E_{th1}$, alors l'unité de contrôle effectue les étapes S118 à S122 comme décrit précédemment pour le premier mode de réalisation.

En particulier, le module de commande de cellule 66 commande le module 32 en configuration bloquée à l'étape S118 correspondant à l'instant G1, le module de traitement attend que la durée de reconduction $T_{r1}$, mesurée à partir de l'instant G1 soit écoulée à l'étape S120, et une fois la durée de reconduction $T_{r1}$ écoulée, commande en configuration passante les modules 132 et 142 à un instant H1. Les instants G1 et H1 sont visibles sur la figure 9.

Le disjoncteur $4_2$ étant connecté en amont du disjoncteur $4_1$ le module de traitement 62 effectue une deuxième itération des étapes S112 à S115, S320 et S118 à S122 en utilisant le seuil de courant de défaut $I_2$ du disjoncteur $4_2$ et le cas échéant, en calculant l'énergie de déclenchement $E_{d2}$, les intensités maximale $I_{max2}$ et minimale $I_{min2}$, en utilisant le seuil de déclenchement $E_{th2}$ et la durée de reconduction $T_{r2}$. Si la durée de test $T_t$ n'est pas écoulée, le module de traitement 62 détecte à l'étape S114 si l'intensité I du courant mesurée par le capteur de courant 52 est inférieure ou égale ou strictement supérieure au seuil de courant de défaut $I_2$ du disjoncteur $4_2$, autrement dit, si le court-circuit est toujours présent.

Si l'intensité I du courant mesurée par le capteur de courant 52 est inférieure ou égale au seuil de courant de défaut $I_2$ du disjoncteur $4_2$, le module de traitement 62 effectue à nouveau l'étape S112, et un fonctionnement itératif est alors mis en oeuvre.

Si la durée de test $T_t$ est écoulée sans que l'intensité I du courant mesurée par le capteur de courant 52 soit devenue strictement supérieure au seuil de courant de défaut $I_2$ du disjoncteur $4_2$, alors l'unité de contrôle 60 effectue l'étape S140. Si l'intensité I est strictement supérieure au seuil de défaut furtif $I_0$, alors le module de commande de cellule 66 effectue l'étape S138, sinon, le module de commande de l'interrupteur mécanique 164 commande l'interrupteur mécanique 112 en configuration fermée lors de l'étape S317, le processus est réinitialisé, et l'étape S102 est effectuée à nouveau.

Dans l'exemple des figures 8 et 9, lors de l'étape S114, le module de traitement 62, détermine à l'instant J1 que l'intensité I est strictement supérieure au seuil de courant de défaut $I_2$ du disjoncteur $4_2$. L'unité de contrôle 60 détermine à l'étape S115 que le seuil de courant de défaut $I_2$ est différent du seuil de courant de défaut final $I_f$. Le dispositif 10 effectue les étapes S320 et S118 à S122, en utilisant l'énergie de déclenchement $E_{d2}$, le seuil d'énergie de déclenchement $E_{th2}$, la durée de reconduction $T_{r2}$, l'intensité maximale $I_{max2}$ et l'intensité minimale $I_{min2}$, cette dernière étant égale au seuil de courant de défaut $I_2$. L'énergie de déclenchement $E_{d2}$ est représentée en pointillés aux figures 8 et 9 sur le graphe d'énergie $E_d$.

Lors d'un instant K1, le module de traitement 62 effectue la sous-étape S322 et détermine l'énergie de déclenchement $E_{d2}$ est strictement inférieure au seuil d'énergie $E_{th2}$. Le module de traitement 62 effectue ensuite la sous-étape S324 et détermine que l'intensité I est strictement supérieure à l'intensité minimale $I_{min2}$, et effectue la sous-étape S326 et détermine que l'intensité I a atteint l'intensité maximale $I_{max2}$, autrement dit, est supérieure ou égale à l'intensité maximale $I_{max2}$. Le module de commande de cellule 66 effectue alors une sous-étape S328 dans laquelle il commande le module de commutation 142 en configuration bloquée à l'instant K1, autrement dit, commande les modules de commutation dont les tensions de limitation des éléments de limitation forment le palier d'écrêtage $P_e$, ici le module de commutation 142. Avantageusement, lors de la sous-étape S328, le module de commande de cellule 66 commande en configuration passante les modules de commutation dont les tensions de limitation des éléments de limitation ne forment pas le palier d'écrêtage $P_e$. La tension U devient égale au palier d'écrêtage $P_e$. Cela permet d'éviter une intensité I trop importante qui risquerait d'endommager l'installation électrique 1.

En variante, le module de commande de cellule 66 commande chaque module de commutation 132, 142 en configuration bloquée

En variante non représentée, dans le cas où le nombre N de paliers est supérieur à trois, le module de commande de cellule 66 commande les modules de commutation dont les tensions de limitation des éléments de limitation forment un seuil supérieur à la tension réseau nominale $U_s$, de sorte à diminuer l'intensité I selon la formule :

$$TA \cong 1 - \frac{U}{U_s}$$

avec

- TA le taux de croissance de l'intensité I ;
- U la tension aux bornes du dispositif 10 ; et
- $U_s$ la tension réseau nominale.

En pratique, les tensions induites par la résistance des conducteurs 7 et 8, et par le défaut sont considérées négligeables, et le taux d'accroissement TA est ainsi considéré égal à $1 - \frac{U}{U_s}$.

L'intensité diminue jusqu'à un instant L1 lors duquel l'intensité I devient égale ou inférieure à l'intensité minimale $I_{min2}$. Lors de la sous-étape S326, le module de traitement 62 détermine donc que l'intensité I est inférieure ou égale à l'intensité minimale $I_{min2}$ et le module de commande 66 effectue une sous-étape S330, dans laquelle il commande dans l'état passant les modules dont les tensions de limitation des éléments de limitation forment le palier d'écrêtage $P_e$, ici, le module 142. L'intensité I augmente à nouveau et la tension U devient nulle. La sous-étape S322 est ensuite effectuée à nouveau et un fonctionnement itératif est mis en oeuvre. Cela permet d'assurer que l'intensité I est suffisamment élevée pour que l'énergie de déclenchement $E_{d2}$ continue d'augmenter.

En variante non représentée, lors de la sous-étape S330, le module de commande de cellule 66 commande les modules formant le palier de limitation P1 dans l'état bloqué et les autres dans l'état passant.

En variante non représentée, lors de la sous-étape S330, le module de commande de cellule 66 commande tous les modules dans l'état passant.

À un instant M1, le module de traitement 62 détermine lors de l'étape S322 que l'énergie de déclenchement $E_{d2}$ a atteint le seuil d'énergie $E_{th2}$. Le module de commande de cellule 66 commande l'ensemble des modules de commutation 132, 142 en configuration bloquée lors de l'étape S118. Suite à l'étape S118, l'unité de contrôle 60 effectue les étapes S120 à 122.

Le module de traitement 62 attend que la durée de reconduction $T_{r2}$ soit écoulée à l'étape S120 et commande les modules de commutation 132, 142 en configuration passante à l'étape S122.

Le module de traitement 62 effectue ensuite une troisième itération des étapes S112, à S115, S320 et S118 à S122, en utilisant le seuil de courant de défaut $I_3$ du disjoncteur $4_3$ et le cas échéant, en calculant l'énergie de déclenchement $E_{d3}$, les intensités maximale $I_{max3}$ et minimale $I_{min3}$, en utilisant le seuil de déclenchement $E_{th3}$ et la durée de reconduction $T_{r3}$. Si, à l'étape S112 la durée de test $T_t$ est écoulée sans que l'intensité I du courant mesurée par le capteur de courant 52 soit devenue strictement supérieure au seuil de courant de défaut $I_3$, l'unité de contrôle 60 effectue l'étape S140. Si l'intensité est strictement supérieure au seuil de défaut furtif $I_0$, alors le module de commande de cellule 66 effectue l'étape S138, sinon, l'étape S317 est effectuée, dans laquelle l'interrupteur mécanique 112 est commandé en configuration fermée, le procédé est réinitialisé, et l'étape S102 est effectuée à nouveau.

Dans l'exemple de la figure 8, le module de traitement 62 détermine que la durée de test $T_t$ n'est pas écoulée, effectue l'étape S114 et détecte à un instant Q1 que l'intensité I du courant mesurée par le capteur de courant 52 est strictement supérieure au seuil de courant de défaut $I_3$ du disjoncteur $4_3$, autrement dit, que le court-circuit est toujours présent.

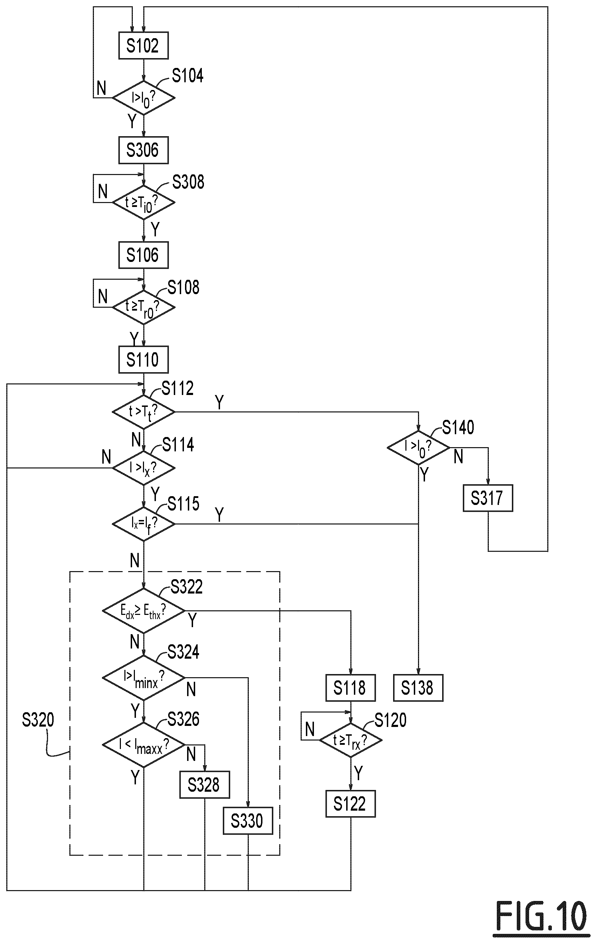

L'unité de contrôle 160 effectue ensuite les étapes S115, S320 et S118 à S122. L'énergie de déclenchement $E_{d3}$ est représentée en trait plein à la figure 8 sur le graphe d'énergie $E_d$. La figure 10 représente le procédé de commande du dispositif 100, avec $I_x$, $I_{minx}$, $I_{maxx}$ $Ed_x$, $E_{thx}$ et $T_{rx}$ respectivement le courant de défaut, l'intensité minimale, l'intensité maximale, l'énergie de déclenchement, le seuil de déclenchement et la durée de reconduction pour l'itération x, avec x égal à 1, 2 ou 3 En variante non représentée, l'installation 1 comprend plus de trois disjoncteurs et les étapes S112, à S115, S320 et S118 à S122 continuent d'être itérées tant qu'un disjoncteur est connecté immédiatement en amont du dernier disjoncteur déclenché.

Le module de traitement 62 effectue à nouveau l'étape S112 et détermine si la durée de test $T_t$, mesurée à partir de l'instant ou la durée de reconduction $T_{r3}$ est écoulée, correspondant à l'instant R1, est écoulée. Si la durée de test $T_t$ n'est pas écoulée, le module de traitement 62 détecte à l'étape S114 si l'intensité I du courant mesurée par le capteur de courant 52 est inférieure ou égale ou strictement supérieure au seuil de courant de défaut final $I_f$, autrement dit, si le court-circuit est toujours présent.

Si l'intensité I du courant mesurée par le capteur de courant 52 est inférieure ou égale au seuil de courant de défaut final $I_f$, le module de traitement 62 effectue à nouveau l'étape S112, et un fonctionnement itératif est alors mis en œuvre.

Si la durée de test $T_t$ est écoulée sans que l'intensité I du courant mesurée par le capteur de courant 52 soit devenue strictement supérieure au seuil de courant de défaut final $I_f$, alors l'unité de contrôle 60 effectue l'étape S140. Si l'intensité est strictement supérieure au seuil de défaut furtif $I_0$, alors le module de commande de cellule 66 effectue l'étape S138, sinon l'interrupteur mécanique 112 est commandé en configuration fermée à l'étape S317, le procédé est réinitialisé, et l'étape S102 est effectuée à nouveau.

Si l'intensité I du courant mesurée par le capteur de courant 52 est strictement supérieure au seuil de courant de défaut final $I_f$, ce qui correspond à l'instant V1 sur la figure 4, cela signifie que le défaut est situé en amont du disjoncteur $4_3$, et qu'il est toujours présent. L'unité de contrôle détermine à l'étape S115 que le seuil de courant utilisé à l'étape S114 précédente est égal au seuil de courant de défaut final $I_f$. Le module de commande de cellule 66 effectue alors l'étape S138, dans laquelle il commande tous les modules de commutation, ici les modules 132 et 134, en configuration bloquée et interrompt le courant dans le dispositif 10.

De manière optionnelle, une fois l'intensité I du courant devenue nulle suite à l'étape S138, le module de commande de sectionneurs 68 commande les sectionneurs 23 et 24 en configuration bloquée, afin de réaliser une isolation galvanique du dispositif 10.

En variante non représentée, la source 3 et la charge 5 sont reliées entre elles par plusieurs conducteurs de phase, par exemple trois. Dans ce cas, le dispositif 10 comprend avantageusement, pour chaque conducteur de phase, un interrupteur mécanique et une cellule d'interruption connectée en parallèle de l'interrupteur mécanique.

De manière optionnelle, un interrupteur mécanique est connecté au conducteur de neutre, une cellule d'interruption étant connectée en parallèle de l'interrupteur mécanique.

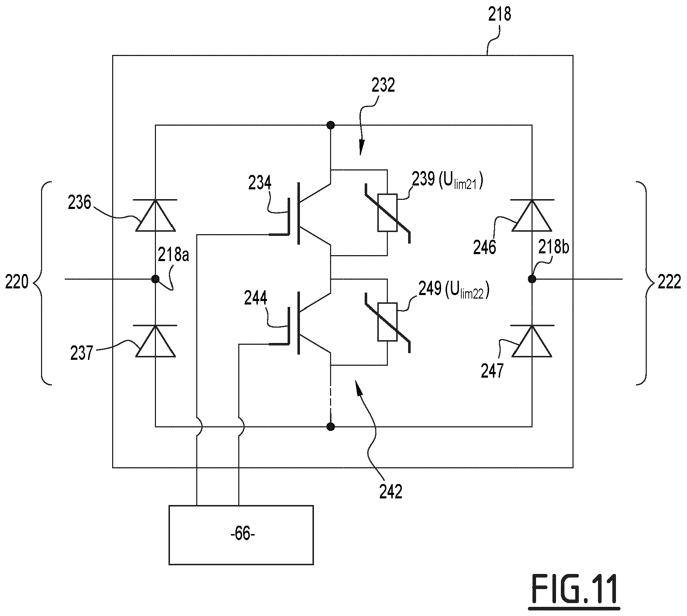

La figure 11 est un schéma d'une cellule d'interruption 218 conforme à un troisième mode de réalisation de l'invention, en tant que variante à la cellule d'interruption 18 ou 118.

Lorsque la cellule d'interruption 218 est intégrée au dispositif 10, elle remplace la cellule d'interruption 18 et est connectée en série au conducteur de phase 7 par une entrée 218a et une sortie 218b.

Lorsque la cellule d'interruption 218 est intégrée à un dispositif 100, la cellule d'interruption 218 remplace la cellule d'interruption 118. Dans ce cas, la cellule d'interruption 218 est, de manière similaire à la cellule d'interruption 118, connectée en parallèle de l'interrupteur mécanique 112, de telle sorte que l'entrée 112a et la sortie 112b de l'interrupteur mécanique 112 sont connectées respectivement à l'entrée 218a et à la sortie 218b de la cellule d'interruption 218. Plus spécifiquement, l'entrée 112a de l'interrupteur mécanique 112 et l'entrée 218a de la cellule d'interruption 218 sont connectées par la liaison électrique 119a, non interruptible, et la sortie 112b de l'interrupteur mécanique 112 est connectée à la sortie 218b de la cellule d'interruption 218 par la liaison électrique 119b également non interruptible.

La cellule d'interruption 218 comprend deux branches de redressement 220 et 222. Chaque branche de redressement 220 et 222 comprend deux diodes, respectivement 236 et 237 pour la branche de redressement 220, et 246 et 247 pour la branche de redressement 222. Les diodes 236 et 237 sont connectées en anti-série l'une par rapport à l'autre, c'est-à-dire que les diodes 236 et 237 sont connectées en série et ne conduisent jamais le courant en même temps. Il en est de même pour les diodes 246 et 247.

L'entrée 218a et la sortie 218b de la cellule d'interruption 218 correspondent respectivement au point milieu de la branche de redressement 220, entre les diodes 236 et 237 et au point milieu de la branche de redressement 222, entre les diodes 246 et 247. Ainsi, la cellule d'interruption 218 est connectée en parallèle de l'interrupteur mécanique 112 par le point milieu de chaque branche de redressement 220 et 222.

La cellule d'interruption 218 comprend deux modules d'interruption 232 et 242. Les modules d'interruption 232 et 242 sont connectés en parallèle des branches de redressement 220 et 222 et en série l'un à l'autre. En variante, la cellule d'interruption 218 comprend plus de deux modules d'interruption, connectés en série avec le module d'interruption 242 et en parallèle des branches 220 et 222, ainsi que symbolisé par la ligne en pointillés à la figure 11.

Les modules d'interruption 232 et 242 comprennent respectivement un élément semi-conducteur commandable en commutation, qui est ici un transistor 234 et 244, et un élément de limitation de tension 239 et 249. L'élément de limitation de tension 239 est connecté en parallèle du transistor 234 et l'élément de limitation de tension 249 est connecté en parallèle du transistor 244. Les éléments de limitation de tension 239 et 249 sont similaires, au moins fonctionnellement, aux éléments de limitation de tension 139 et 149 et ont une tension de limitation $U_{lim21}$ et $U_{lim22}$ respectivement. La tension de limitation $U_{lim21}$ est différente de la tension de limitation $U_{lim22}$ et ces tensions forment trois paliers, de manière similaire aux tensions de limitation $U_{lim11}$ et $U_{lim12}$.

La cellule d'interruption 218 est configurée pour recevoir du courant alternatif et pour le convertir en courant continu grâce aux diodes 236, 237, 246 et 247, de telle sorte que du courant continu circule dans les modules de commutation 232 et 242. La disposition des diodes 236, 237, 246 et 247 permet de limiter le nombre de diodes dans la cellule d'interruption 218 à quatre. Ainsi, même lorsque la cellule d'interruption 218 comprend plus de deux modules de commutation, seules les quatre diodes 236, 237, 246 et 247 sont nécessaires à leur fonctionnement, limitant ainsi le nombre de diodes nécessaires par rapport à la cellule d'interruption 118.

Le procédé de commande du dispositif de protection 10 comprenant une cellule d'interruption 218 et le procédé de commande du dispositif de protection 100 comprenant une cellule d'interruption 218 sont similaires à ceux décrits respectivement pour le dispositif de protection 10 comprenant la cellule d'interruption 18 et pour le dispositif de protection 100 comprenant la cellule d'interruption 118 et ne sont pas à nouveau décrits en détail.

Avantageusement, les procédés de commande décrits et représentés aux figures 3 à 5, et 8 à 10 durent 10 ms ou moins.

En variante applicable à tous les modes de réalisation, dans le cas où l'un des disjoncteurs de la série de disjoncteurs 4 est un disjoncteur statique ou hybride, une durée d'isolation est associée à ce disjoncteur, correspondant à une durée nécessaire pour déclencher le disjoncteur.

En variante applicable à tous les modes de réalisation, chaque disjoncteur de la série de disjoncteurs 4 est associée à une durée test, qui peut être différente pour un ou plusieurs des disjoncteurs $4_1$, $4_2$, $4_3$. Dans ce cas, la durée test utilisée est mise à jour à l'étape S126, en complément des valeurs du seuil de courant de défaut, de la durée de reconduction, et le cas échéant, des intensités maximale et minimale.

En variante applicable à tous les modes de réalisation, le dispositif 10 est disposé en amont d'un transformateur de moyenne tension en basse tension, et la série de disjoncteurs 4 est en aval du transformateur de moyenne tension en basse tension.

En variante non représentée applicable à tous les modes de réalisation, l'installation électrique 1 ne comprend pas de conducteur de neutre 8.

Toute caractéristique décrite pour un mode de réalisation ou une variante dans ce qui précède peut être mise en œuvre pour les autres modes de réalisation et variantes décrits précédemment, pour autant que techniquement faisable, dans le cadre de l'invention définie par les revendications.

**Revendications**

1. Procédé de commande d'un dispositif de protection électrique (10 ; 100), configuré pour être connecté entre une source (3) et une série (4) de disjoncteurs ($4_1$, $4_2$, $4_3$), le dispositif (10 ; 100) comprenant :

   - une cellule d'interruption (18 ; 118 ; 218), comprenant au moins un module de commutation (32 ; 132, 142 ; 232, 242), chaque module de commutation (32 ; 132, 142 ; 232, 242) comprenant :

     ∘ au moins un élément semi-conducteur (34, 35 ; 134, 135, 144, 145 ; 234, 244) ; et
     ∘ un élément de limitation (39 ; 139, 149 ; 239, 249), connecté en parallèle de au moins un élément semi-conducteur (34, 35 ; 134, 135, 144, 145 ; 234, 244), l'élément de limitation (39 ; 139, 149 ; 239, 249) ayant une tension de limitation ($U_{lim1}$ ; $U_{lim11}$, $U_{lim12}$ ; $U_{lim21}$, $U_{lim22}$), la ou les tensions de limitation, seules et/ou sommées entre elles, formant un ou une pluralité de paliers distincts (P1, P2, P3),

   chaque module de commutation (32 ; 132, 142 ; 232, 242) étant configuré pour basculer entre une configuration passante, dans laquelle un courant circulant entre la source (3) et la série de disjoncteurs (4) circule dans le ou dans l'un des éléments semi-conducteurs (34, 35 ; 134, 135, 144, 145 ; 234, 244), et une configuration bloquée, dans laquelle, si le courant circule dans le module de commutation (32 ; 132, 142 ; 232, 242), il circule dans l'élément de limitation (39 ; 139, 149 ; 239, 249) ;
   - un capteur de courant (52), configuré pour mesurer une intensité (I) et/ou une dérivée (I') du courant ;
   - une unité de contrôle (60 ; 160) comprenant un module de traitement (62), et un module de commande de cellule (66), configuré pour commander chaque module de commutation (32 ; 132, 142 ; 232, 242) dans la configuration passante et dans la configuration bloquée,

   chaque disjoncteur ($4_1$, $4_2$, $4_3$) de la série (4) étant configuré pour basculer entre une configuration armée et une configuration déclenchée, chaque disjoncteur ($4_1$, $4_2$, $4_3$) de la série (4) étant associé à un seuil de courant de défaut ($I_1$, $I_2$, $I_3$), un seuil d'énergie de déclenchement ($E_{th1}$, $E_{th2}$, $E_{th3}$) et une durée de reconduction ($T_{r1}$, $T_{r2}$, $T_{r3}$), les disjoncteurs ($4_1$, $4_2$, $4_3$) étant connectés en série les uns aux autres et arrangés de l'amont vers l'aval par ordre décroissant de leur seuil de courant de défaut ($I_1$, $I_2$, $I_3$) respectif : le procédé comprenant au moins les étapes suivantes :

   a) mesurer (S102) l'intensité (I) et/ou la dérivée (I') de l'intensité (I) en fonction du temps par le capteur de courant (52) ;
   b) détecter (S114) un défaut électrique de type court-circuit par le module de traitement (62), si l'intensité (I) mesurée par le capteur de courant (52) est strictement supérieure au seuil de courant de défaut ($I_1$, $I_2$, $I_3$) et/ou la dérivée (I') mesurée par le capteur de courant (52) est strictement supérieure à un seuil de dérivée de défaut d'un disjoncteur donné, le disjoncteur donné étant le disjoncteur en configuration armée le plus en aval de la série de disjoncteurs (4) ;

c) lorsqu'un défaut électrique de type court-circuit est détecté, attendre (S116 ; S320) que l'énergie de déclenchement ($E_{d1}$, $E_{d2}$, $E_{d3}$) devienne supérieure ou égale à un seuil d'énergie de déclenchement ($E_{th1}$, $E_{th2}$, $E_{th3}$) du disjoncteur donné ;

d) lorsque l'énergie de déclenchement ($E_{d1}$, $E_{d2}$, $E_{d3}$) est supérieure ou égale au seuil d'énergie de déclenchement ($E_{th1}$, $E_{th2}$, $E_{th3}$) du disjoncteur donné, commander (S118) en configuration bloquée chaque module de commutation (32 ; 132, 142 ; 232, 242) par le module de commande de cellule (66) ;

e) lorsque la durée de reconduction ($T_{r1}$, $T_{r2}$, $T_{r3}$) du disjoncteur donné est écoulée, le disjoncteur donné ayant basculé en configuration déclenchée, commander (S122) chaque module de commutation (32 ; 132, 142 ; 232, 242) en configuration passante, alors que chaque module de commutation (32 ; 132, 142 ; 232, 242) a été commandé en configuration bloquée à l'étape d) ;

f) si un disjoncteur est connecté immédiatement en amont du disjoncteur donné, si une durée de test ($T_t$) n'est pas écoulée et si un court-circuit est détecté, le seuil de courant de défaut, le seuil d'énergie de déclenchement et la durée de reconduction étant celles du disjoncteur en configuration armée immédiatement en amont du disjoncteur donné, effectuer à nouveau les étapes c) à f) ; et

g) si aucun disjoncteur n'est connecté immédiatement en amont du disjoncteur donné, si la durée de test ($T_t$) n'est pas écoulée et si un court-circuit est détecté, le seuil de courant de défaut étant égal à un seuil de courant de défaut final ($I_f$), commander (S138) chaque module de commutation (32 ; 132, 142 ; 232, 242) en configuration bloquée.

2. Procédé de commande selon la revendication 1, dans lequel le procédé comprend, en outre, les étapes successives suivantes :

h) détecter (S104) un défaut électrique de type court-circuit par le module de traitement (62), si l'intensité (I) mesurée par le capteur de courant (52) à l'étape a) est strictement supérieure à un seuil de courant de défaut furtif (I0) et/ou la dérivée (I') mesurée par le capteur de courant (52) à l'étape a) est strictement supérieure à un seuil de dérivée de défaut ;

i) commander (S106) en configuration bloquée chaque module de commutation (32 ; 132, 142 ; 232, 242) par le module de commande de cellule (66) si un défaut électrique est détecté à l'étape h) ;

j) lorsqu'une durée de reconduction ($T_{r0}$) du

défaut furtif est écoulée, commander chaque module de commutation (32 ; 132, 142 ; 232, 242) en configuration passante; et

k) si la durée de test ($T_t$) n'est pas écoulée, effectuer les étapes b) à g), le disjoncteur donné étant le disjoncteur en configuration armée connecté le plus en aval.

3. Procédé selon la revendication 2, dans lequel le procédé comprend, en outre, l'étape suivante :
l) lorsqu'un défaut électrique de type court-circuit est détecté par le module de traitement (62) à l'étape h), commander (S306) en configuration ouverte un interrupteur mécanique (112), connecté en parallèle de la cellule d'interruption (118 ; 218), l'interrupteur mécanique (112) étant configuré pour basculer entre une configuration fermée, dans laquelle l'interrupteur mécanique (112) conduit le courant, et une configuration ouverte, dans laquelle l'interrupteur mécanique (112) ne conduit pas le courant, par un module de commande d'interrupteur mécanique (164) inclus dans l'unité de contrôle (160),
et dans lequel l'étape i) est effectuée lorsqu'une tenue diélectrique de l'interrupteur mécanique (112) est supérieure à une somme de la tension de limitation ($U_{lim11}$, $U_{lim12}$ ; $U_{lim21}$, $U_{lim22}$) de l'élément de limitation de chaque module de commutation (132, 142 ; 232, 242).

4. Procédé selon la revendication 3, dans lequel si la durée de test ($T_t$) est écoulée et si un court-circuit n'est pas détecté, commander (S317) l'interrupteur mécanique (112) en configuration fermée.

5. Procédé selon l'une quelconque des revendications 2 à 4, comprenant en outre l'étape suivante :
m) si la durée de test ($T_t$) est écoulée, et que l'intensité (I) est strictement supérieure à un seuil de courant de défaut furtif ($I_0$) et/ou la dérivée (I') mesurée par le capteur de courant (52) est strictement supérieure à un seuil de dérivée de défaut, commander (S138) chaque module de commutation (32 ; 132, 142 ; 232, 242) en configuration bloquée.

6. Procédé selon l'une quelconque des revendications précédentes, dans lequel chaque disjoncteur ($4_1$, $4_2$, $4_3$) est, en outre, associé à un seuil d'intensité minimale ($I_{min1}$, $I_{min2}$, $I_{min3}$) et un seuil d'intensité maximale ($I_{max1}$, $I_{max2}$, $I_{max3}$) et dans lequel l'étape c) comprend en outre les sous-étapes suivantes:

c1) lorsqu'un défaut électrique de type court-circuit est détecté par le module de traitement (62) à l'étape b), que l'énergie de déclenchement ($E_{d1}$, $E_{d2}$, $E_{d3}$) est inférieure ou égale au seuil d'énergie de déclenchement ($E_{th1}$, $E_{th2}$, $E_{th3}$) du disjoncteur donné et que l'intensité (I) mesurée par le capteur de courant (52) est inférieure ou égale au seuil d'intensité minimale ($I_{min1}$, $I_{min2}$, $I_{min3}$), commander (S330) en configuration passante, par le module de commande de cellule (66), le ou les modules de commutation dont les tensions de limitation des éléments de limitation forment un palier d'écrêtage, le palier d'écrêtage étant le plus petit palier supérieur à une tension réseau nominale ($P_e$); et
c2) lorsqu'un défaut électrique de type court-circuit est détecté par le module de traitement (62) à l'étape b), que l'énergie de déclenchement ($E_{d1}$, $E_{d2}$, $E_{d3}$) est inférieure ou égale au seuil d'énergie de déclenchement ($E_{th1}$, $E_{th2}$, $E_{th3}$) du disjoncteur donné et que l'intensité (I) mesurée par le capteur de courant (52) atteint le seuil d'intensité maximale ($I_{max1}$, $I_{max2}$, $I_{max3}$), commander (S328) en configuration bloquée, par le module de commande de cellule (66), le ou les modules de commutation dont les tensions de limitation des éléments de limitation forment le palier d'écrêtage ($P_e$).

7. Procédé selon la revendication 6, dans lequel le dispositif (100) comprend une pluralité de modules de commutation (132, 142 ; 232, 242), connectés les uns aux autres, la sous-étape c2) comprend, en outre, une commande en configuration passante, par le module de commande de cellule (66), des modules de commutation dont les tensions de limitation des éléments de limitation ne forment pas le palier d'écrêtage ($P_e$).

8. Dispositif (10 ; 100) de protection électrique configuré pour être connecté entre une source (3) et une série (4) de disjoncteurs ($4_1$, $4_2$, $4_3$), chaque disjoncteur ($4_1$, $4_2$, $4_3$) de la série (4) étant configuré pour basculer entre une configuration armée et une configuration déclenchée, chaque disjoncteur ($4_1$, $4_2$, $4_3$) de la série (4) étant associé à un seuil de courant de défaut ($I_1$, $I_2$, $I_3$), un seuil d'énergie de déclenchement ($E_{th1}$, $E_{th2}$, $E_{th3}$) et une durée de reconduction ($T_{r1}$, $T_{r2}$, $T_{r3}$), les disjoncteurs ($4_1$, $4_2$, $4_3$) étant configurés pour être connectés en série les uns aux autres et arrangés de l'amont vers l'aval par ordre décroissant de leur seuil de courant de défaut ($I_1$, $I_2$, $I_3$) respectif, le dispositif (10 ; 100) comprenant :

 - une cellule d'interruption (18 ; 118 ; 218), comprenant au moins un module de commutation (32 ; 132, 142 ; 232, 242), chaque module de commutation 32 ; 132, 142 ; 232, 242) comprenant :

  ◦ au moins un élément semi-conducteur (34, 35 ; 134, 135, 144, 145 ; 234, 244) ; et
  ◦ un élément de limitation (39 ; 139, 149 ; 239, 249), connecté en parallèle de l'au moins un élément semi-conducteur (34, 35 ; 134, 135, 144, 145 ; 234, 244), l'élément de limitation (39 ; 139, 149 ; 239, 249) ayant une tension de limitation ($U_{lim1}$ ; $U_{lim11}$, $U_{lim12}$ ; $U_{lim21}$, $U_{lim22}$), la ou les tensions de limitation, seules et/ou sommées entre elles, formant un ou une pluralité de paliers distincts (P1, P2, P3),

 chaque module de commutation (32 ; 132, 142 ; 232, 242) étant configuré pour basculer entre une configuration passante, dans laquelle un courant circulant entre la source (3) et la série de disjoncteurs (4) circule dans le ou dans l'un des éléments semi-conducteurs (34, 35 ; 134, 135, 144, 145 ; 234, 244), et une configuration bloquée, dans laquelle si le courant circule dans le module de commutation (32 ; 132, 142 ; 232, 242), il circule dans l'élément de limitation (39 ; 139, 149 ; 239, 249) ;
 - un capteur de courant (52), configuré pour mesurer une intensité (I) du courant et/ou une dérivée (I') du courant ;
 - une unité de contrôle (60 ; 160) comprenant :

  ◦ un module de traitement (62) configuré pour détecter un défaut électrique de type court-circuit en fonction de l'intensité (I) et/ou de la dérivée (I') mesurée par le capteur de courant (52) ; et
  ◦ un module de commande de cellule (66), configuré pour commander chaque module de commutation (32 ; 132, 142 ; 232, 242) dans la configuration passante et dans la configuration bloquée,

 le dispositif (10 ; 100) étant configuré pour mettre en oeuvre le procédé de l'une quelconque des revendications précédentes.

9. Dispositif (10) selon la revendication 8, comprenant un unique module de commutation (32), la tension de limitation ($U_{lim1}$) de l'élément de limitation de tension (39) du module de commutation (32) formant alors le palier d'écrêtage ($P_e$).

10. Installation (1) électrique comprenant une source (3), une charge (5), une série (4) de disjoncteurs ($4_1$, $4_2$, $4_3$), connectés entre la source (3) et la charge (5), chaque disjoncteur ($4_1$, $4_2$, $4_3$) de la série (4) étant configuré pour basculer entre une configuration armée et une configuration déclenchée, chaque disjoncteur ($4_1$, $4_2$, $4_3$) de la série (4) étant associé à un seuil de courant de défaut ($I_1$, $I_2$, $I_3$), un seuil d'énergie de déclenchement ($E_{th1}$, $E_{th2}$, $E_{th3}$) et une durée de reconduction ($T_{r1}$, $T_{r2}$, $T_{r3}$), les disjoncteurs ($4_1$, $4_2$, $4_3$) étant connectés en série les uns aux autres et arrangés de l'amont vers l'aval par ordre décroissant de leur seuil de courant de défaut ($I_1$, $I_2$, $I_3$) respectif, et un dispositif (10 ; 100) selon l'une quelconque des revendications 8 et 9, connecté entre la source (3) et la série de disjoncteurs (4).

FIG.1

FIG.2

FIG.3

FIG.4

FIG.5

FIG.6

EP 4 668 514 A1

FIG.7

FIG.8

FIG.9

FIG.10

FIG.11

| | Europäisches Patentamt European Patent Office Office européen des brevets | **RAPPORT DE RECHERCHE EUROPEENNE** | Numéro de la demande<br>EP 25 18 2890 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | KR 2023 0096655 A (LS ELECTRIC CO LTD [KR]) 30 juin 2023 (2023-06-30)<br>* alinéas [0039] - [0056]; figure 1 *<br>----- | 1-10 | INV.<br>H02H3/093<br>H02H7/26<br>H02H3/06 |
| A | CN 205 104 889 U (SIMENS MFG AND ENG CENTER LTD) 23 mars 2016 (2016-03-23)<br>* alinéas [0077] - [0093]; figures 1,2 *<br>----- | 1,8 | |
| A | US 2014/078631 A1 (VALDES MARCELO ESTEBAN [US]) 20 mars 2014 (2014-03-20)<br>* alinéas [0014] - [0020]; figure 1 *<br>----- | 1,8 | |

**DOMAINES TECHNIQUES RECHERCHES (IPC)**

H02H

Le présent rapport a été établi pour toutes les revendications

| Lieu de la recherche | Date d'achèvement de la recherche | Examinateur |
|---|---|---|
| Munich | 12 novembre 2025 | Colombo, Alessandro |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 18 2890

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-11-2025

| Document brevet cité au rapport de recherche | Date de publication | Membre(s) de la famille de brevet(s) | Date de publication |
|---|---|---|---|
| KR 20230096655 A | 30-06-2023 | CN 117730462 A | 19-03-2024 |
| | | KR 20230096655 A | 30-06-2023 |
| | | US 2024388080 A1 | 21-11-2024 |
| | | WO 2023120909 A1 | 29-06-2023 |
| CN 205104889 U | 23-03-2016 | AUCUN | |
| US 2014078631 A1 | 20-03-2014 | CN 103683221 A | 26-03-2014 |
| | | DE 102013109767 A1 | 20-03-2014 |
| | | US 2014078631 A1 | 20-03-2014 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- KR 20230096655 A
- CN 205104889 U
- US 2014078631 A1